# EUROPÄISCHE PATENTSCHRIFT

(11) **EP 3 541 582 B1**
(45) Veröffentlichungstag und Bekanntmachung des Hinweises auf die Patenterteilung: **01.11.2023**
(21) Anmeldenummer: 17791572.5
(22) Anmeldetag: 10.10.2017
(51) Int. Cl.: B25J 9/00, B25J 13/02, G05B 19/421, G05B 19/427

(54) **ROBOTERBEDIENHANDGERÄT, ZUGEHÖRIGE KOPPLUNGSVORRICHTUNG, ROBOTER UND VERFAHREN**
HANDHELD ROBOT OPERATING DEVICE, ASSOCIATED COUPLING APPARATUS, ROBOT, AND METHOD
CONSOLE DE COMMANDE PORTATIVE ROBOTISÉE, DISPOSITIF D'ACCOUPLEMENT ASSOCIÉ, ROBOT ET PROCÉDÉ

(30) Priorität: 17.11.2016 DE 102016222675
(43) Veröffentlichungstag der Anmeldung: 25.09.2019
(73) Patentinhaber: KUKA Deutschland GmbH, 86165 Augsburg (DE)
(72) Erfinder: RIEDEL, Martin, 86165 Augsburg (DE)
(74) Vertreter: Oelke, Jochen
(86) Internationale Anmeldenummer: PCT/EP2017/001195
(87) Internationale Veröffentlichungsnummer: WO 2018/091122

(56) Entgegenhaltungen:
- EP-A1- 1 724 072
- EP-A1- 2 194 434
- DE-B3-102015 206 578
- JP-A- H11 277 470
- JP-A- 2001 260 062
- JP-A- 2012 157 946
- US-A1- 2010 312 391

## Beschreibung

Die Erfindung betrifft ein Roboterbedienhandgerät, aufweisend ein manuell tragbares Gehäuse, einen am manuell tragbaren Gehäuse befestigten Handgriff, ein für eine Einhandbedienung in einer einhandgriffweite zu dem Handgriff am Gehäuse angeordnetes Eingabemittel, das ausgebildet ist, eine Zustimmeinrichtung zu bilden, bei deren Aktivierung eine mit dem Roboterbedienhandgerät steuerungstechnisch verbundene Robotersteuerung ein handgeführtes Bewegen eines von der Robotersteuerung gesteuerten Roboterarms zulässt und bei einer Deaktivierung der Zustimmeinrichtung die mit dem Roboterbedienhandgerät steuerungstechnisch verbundene Robotersteuerung ein handgeführtes Bewegen des von der Robotersteuerung gesteuerten Roboterarms unterbindet, und eine am manuell tragbaren Gehäuse angeordnete, mehrdimensionale Eingabevorrichtung, die ein manuelles Betätigungsglied aufweist, das in den mehreren Dimensionen bewegbar an einem Basiskörper der mehrdimensionalen Eingabevorrichtung gelagert ist, wobei die mehrdimensionale Eingabevorrichtung wenigstens einen Sensor aufweist, der ausgebildet ist, eine Bewegung des manuellen Betätigungsglieds relativ zum Basiskörper in den mehreren Dimensionen zu erfassen, und der Basiskörper starr im manuell tragbaren Gehäuse befestigt ist. Die Erfindung betrifft außerdem eine zugehörige Kopplungsvorrichtung, einen zugehörigen Roboter und ein zugehöriges Verfahren.

Aus der EP 0 850 730 B1 ist eine Vorrichtung zum direkten Lehren eines Roboters bekannt, mit einem Kraftdetektor, und einem Lehrwerkzeug, das aus einem Arbeitswerkzeug oder einem exklusiven Handgriff aufgebaut ist, das an dem Kraftdetektor befestigt ist und im Gebrauch durch einen Bediener zum Führen des Roboters gehalten wird, Mitteln zum Berechnen einer Positions- oder Geschwindigkeits-Steueranweisung basierend auf Daten von dem Kraftdetektor und einem Bewegungsmodell, Mitteln zum Berechnen eines Motorerzeugungsdrehmoments zum Ansteuern des Roboters basierend auf der Position- oder Geschwindigkeits-Steueranweisung, wobei die Mittel zum Berechnen eines Motorerzeugungsdrehmoments ein Drehmomentbegrenzermittel aufweisen, bei dem ein Grenzwert des Drehmoments gesetzt ist, das einen erforderlichen Minimalwert zum Bewegen des Arms des Roboters angibt, wobei die Vorrichtung Mittel umfasst zum Berechnen eines Schwerkraftausgleichsdrehmoments, Mittel zum Berechnen einer Reibungsausgleichsdrehmoment-Steueranweisung, und Mittel zum Addieren des Schwerkraftausgleichsdrehmoments und des Reibungsausgleichsdrehmoments zu dem Motorerzeugungsdrehmoment.

Aus der DE 10 2015 206578 B3 ist ein Roboter-Bediengerät bekannt, welches ein Gehäuse mit einem handgriffartigen Griffabschnitt aufweist, sowie eine Sicherheits-Grundsteuervorrichtung. Ferner ist ein Halter vorgesehen, der mit dem Gehäuse verbunden ist und zur Aufnahme eine von dem Roboter-Bediengerät verschiedenes, mit der Sicherheits-Grundsteuervorrichtung kommunizierendes Gerät aufzunehmen.

Aus der EP 1 724 072 A1 ist ein Beschleunigungsmesser bekannt, der an einen Roboter befestigt ist und die Bewegung eines Werkzeugs, welches an einem Endeffektor des Roboters angeordnet ist, überwacht. Ein Griff kann dabei an den Endeffektor angebracht werden und der Beschleunigungsmesser kann an dem Griff befestigt werden.

Aus der EP 2 194 434 A1 ist ein Robotersystem bekannt, wobei an dem Roboter eine manuelle Führungsvorrichtung angebracht werden kann. Diese Führungsvorrichtung kommuniziert drahtlos mit einem portablen Terminal.

Aus der JP H11 277470 A ist eine Teach-Vorrichtung bekannt, welche einen Griff aufweist und eine entsprechende Vorrichtung in Form eines Pins um die Teach-Vorrichtung an einen Roboter anzubringen.

Aufgabe der Erfindung ist es, ein Roboterbedienhandgerät, eine zugehörige Kopplungsvorrichtung, einen Roboter und Verfahren zu schaffen, wodurch ein manuelles Handverfahren des Roboterarms verbessert wird.

Die Aufgabe der Erfindung wird gelöst durch ein Roboterbedienhandgerät, aufweisend:
- ein manuell tragbares Gehäuse,
- einen am manuell tragbaren Gehäuse befestigten Handgriff,
- ein für eine Einhandbedienung in einer einhandgriffweite zu dem Handgriff am Gehäuse angeordnetes Eingabemittel, das ausgebildet ist, eine Zustimmeinrichtung zu bilden, bei deren Aktivierung eine mit dem Roboterbedienhandgerät steuerungstechnisch verbundene Robotersteuerung ein handgeführtes Bewegen eines von der Robotersteuerung gesteuerten Roboterarms zulässt und bei einer Deaktivierung der Zustimmeinrichtung die mit dem Roboterbedienhandgerät steuerungstechnisch verbundene Robotersteuerung ein handgeführtes Bewegen des von der Robotersteuerung gesteuerten Roboterarms unterbindet,

- eine am manuell tragbaren Gehäuse angeordnete, mehrdimensionale Eingabevorrichtung, die ein manuelles Betätigungsglied aufweist, das in den mehreren Dimensionen bewegbar an einem Basiskörper der mehrdimensionalen Eingabevorrichtung gelagert ist, wobei die mehrdimensionale Eingabevorrichtung wenigstens einen Sensor aufweist, der ausgebildet ist, eine Bewegung des manuellen Betätigungsglieds relativ zum Basiskörper in den mehreren Dimensionen zu erfassen, und der Basiskörper starr im manuell tragbaren Gehäuse befestigt ist, und
- ein zum manuellen Handführen des Roboterarms durch manuelles Einwirken auf den Handgriff des an den Roboterarm mechanisch gekoppelten Roboterbedienhandgeräts ausgebildetes, am manuellen Betätigungsglied der mehrdimensionalen Eingabevorrichtung des Roboterbedienhandgeräts angeordnetes Kopplungsglied, das ausgebildet ist, in einem an den Roboterarm angekoppelten Zustand des Roboterbedienhandgeräts, das manuelle Betätigungsglied mechanisch starr mit einem Glied des Roboterarms zu verbinden.

Ein Roboterbedienhandgerät im Allgemeinen dient unter Anderem der Steuerung und Programmierung von Robotern dadurch, dass eine Person, wie ein Roboterbenutzer oder ein Roboterprogrammieren, das Roboterbedienhandgerät in einer Hand oder in beiden Händen hält und an dem Roboterbedienhandgerät manuelle Eingaben tätigt, die an eine Robotersteuerung des Roboters kommuniziert werden. Da die Person das Roboterbedienhandgerät in den Händen hält, um beispielsweise in unmittelbarer Nähe des Roboterarms den Roboter programmieren zu können, ist das Gehäuse des Roboterbedienhandgeräts bzw. das komplette Roboterbedienhandgerät manuell tragbar ausgebildet, d.h. das Roboterbedienhandgerät weist eine solche maximale Größe und ein solches maximales Gewicht auf, dass eine Person das Roboterbedienhandgerät unschwer in einer Hand halten und tragen kann. Gleichermaßen können an Anzeigevorrichtungen des Roboterbedienhandgeräts, wie Leuchtmittel und/oder Bildschirme, am Roboterbedienhandgerät Informationen, Zustände, Bilder und/oder sonstige Darstellungen angezeigt werden, die beispielsweise von der Robotersteuerung an das Roboterbedienhandgerät übermittelt werden. Das Roboterbedienhandgerät kann nach allgemein üblichen Sicherheitsvorschriften beispielsweise ein Nothalt-Schaltmittel, einen Betriebsarten-Wahlschalter und wenigstens eine Zustimmeinrichtung aufweisen.

Die Zustimmeinrichtung bildet eine Sicherheitsfunktion, die sicherstellen soll, dass eine Person den Roboterarm, beispielsweise im Handfahrbetrieb, stets bewusst ansteuert. Dazu kann die Zustimmeinrichtung einen manuellen Taster aufweisen, der insbesondere drei Schaltzustände aufweisen kann. Ist der manuelle Taster in seiner Ruhestellung, d.h. der manuelle Taster wird nicht durch eine Person betätigt, ist die Zustimmeinrichtung deaktiviert und die mit dem Roboterbedienhandgerät steuerungstechnisch verbundene Robotersteuerung unterbindet in diesem Zustand ein handgeführtes Bewegen des von der Robotersteuerung gesteuerten Roboterarms. Ist der manuelle Taster in seiner Aktivierungsstellung, d.h. der manuelle Taster wird durch eine Person mit einer Betätigungskraft betätigt, die zwischen einer Mindestkraft und einer Maximalkraft liegt, ist die Zustimmeinrichtung aktiviert und die mit dem Roboterbedienhandgerät steuerungstechnisch verbundene Robotersteuerung lässt ein handgeführtes Bewegen eines von der Robotersteuerung gesteuerten Roboterarms zu. Ein dritter Schaltzustand kann sich ergeben, wenn eine Person den manuellen Taster über die Maximalkraft hinaus, also sozusagen krampfhaft überbetätigt, was als eine Notsituation ausgelegt wird und die automatische Folge hat, dass die Zustimmeinrichtung sofort wieder deaktiviert wird und die mit dem Roboterbedienhandgerät steuerungstechnisch verbundene Robotersteuerung in diesem Zustand ein handgeführtes Bewegen des von der Robotersteuerung gesteuerten Roboterarms unmittelbar unterbindet bzw. ein Bewegen unmittelbar abbricht, d.h. alle Gelenke des Roboterarms bis zum Stillstand abgebremst werden. Die Zustimmeinrichtung kann auch als Zustimmschalter oder Zustimmtaster bezeichnet werden.

Das Roboterbedienhandgerät weist ganz allgemein auch eine mehrdimensionale Eingabevorrichtung auf. Die mehrdimensionale Eingabevorrichtung weist ein zentrales manuelles Betätigungsglied auf, das zumindest in den mehreren Dimensionen manuell bewegt bzw. verstellt werden kann. Die mehrdimensionale Eingabevorrichtung kann beispielsweise ein als solches bekannter Joystick sein. Ein derartiger Joystick weist einen Steuerknüppel auf, der in mehrere Richtungen manuell verstellbar ist und als ein Handgriff ausgebildet ist, der das manuelle Betätigungsglied bildet. Die mehrdimensionale Eingabevorrichtung kann beispielsweise auch eine 3D-Maus oder eine 6D-Maus sein. Bei derartigen mehrdimensionalen Computermäusen ist auf einem stationären Untersatz flexibel ein Steuerkörper beispielsweise in Form einer Kugel oder eines Pucks angebracht. Schub- und Drehkräfte, die eine Person auf den Steuerkörper ausübt, werden in Eingabebefehle umgesetzt. Eine solche 3D-Maus oder 6D-Maus verfügt üblicherweise über drei translatorische und drei rotatorische Freiheitsgrade. Der Steuerkörper bildet dabei das manuelle Betätigungsglied.

Indem erfindungsgemäß ein Kopplungsglied unmittelbar an dem manuellen Betätigungsglied der mehrdimensionalen Eingabevorrichtung des Roboterbedienhandgeräts vorgesehen ist, wird das manuelle Betätigungsglied starr an ein Glied des Roboterarms, an das Werkzeug oder das Werkstück gekoppelt. In Folge dessen kann das restliche Roboterbedienhandgerät, insbesondere dadurch, dass ein Benutzer das Roboterbedienhandgerät an dessen Handgriff festhält, relativ zum manuellen Betätigungsglied geringfügig bewegt werden und dadurch Steuerungsbefehl an die Robotersteuerung übermittelt werden, um den Roboterarm in einem Handfahrbetrieb manuell bewegen zu können. Die in der mehrdimensionalen Eingabevorrichtung bereits vorhandenen Sensoren werden dabei sozusagen zweckentfremdet genutzt, als Kraft- und/oder Momentensensoren, welche die vom Benutzer auf das Glied des Roboterarms, auf das Werkzeug oder auf das Werkstück aufgebrachten manuellen Verstellkräfte oder manuellen Verstellmomente aufnehmen können, um die Robotersteuerung zu veranlassen, den Roboterarm automatisch anzusteuern, derart, dass der Roboterarm den Bewegungen der Hand des Benutzers folgt.

Das Kopplungsglied kann ausgebildet sein, zur formschlüssigen und/oder kraftschlüssigen Verbindung mit einem zum Kopplungsglied korrespondierenden Gegenkopplungsglied, das an einem Glied des Roboterarms, an einem vom Roboterarm geführten Werkzeug, an einem vom Roboterarm zu handhabenden Werkstück oder an einer den Roboterarm tragenden mobilen Plattform befestigt ist.

Das Kopplungsglied kann beispielsweise ein Formelement, insbesondere eine Aussparung, insbesondere eine zylindrische Aussparung, aufweisen, die dadurch gekennzeichnet ist, dass sie in Radialrichtung über ihre Mantelfläche eine Gegenfläche formschlüssig aufnehmen kann.

Das Kopplungsglied kann außerdem ein Halteelement aufweisen, das kraft- und/oder formschlüssig ausgebildet sein kann, beispielsweise aber auch als Magnet ausgeführt sein kann, insbesondere in Ringform zum Aufbringen und Aufrechterhalten einer Koppelkraft. Bei Überschreiten dieser Koppelkraft werden die Koppelpartner wieder getrennt. Weitere alternative Halteelemente können gefedertes Rastmittel mit oder ohne Verriegelung sein und beispielsweise auf Schnapphaken basieren.

Das Gegenkopplungsglied kann einen Ringvorsprung aufweisen, der eine Außenmantelwand und eine Innenmantelwand aufweist, und das Kopplungsglied eine Außenringwand und eine Innenringwand aufweist, derart, dass in einer Kopplungsanordnung von Kopplungsglied und Gegenkopplungsglied die Außenringwand des Kopplungsglieds an der Außenmantelwand des Gegenkopplungsglieds anliegt und die Innenringwand des Kopplungsglieds an der Innenmantelwand des Gegenkopplungsglieds anliegt.

Das Kopplungsglied und das Gegenkopplungsglied können eine Rastvorrichtung bilden, welche ausgebildet ist, ein Zusammenfügen des Kopplungsglieds und des Gegenkopplungsglieds in ausschließlich einer einzigen relativen Orientierung zueinander zuzulassen. So ist eine eindeutige Position und Orientierung des an den Roboterarm, an das Werkzeug oder an das Werkstück angekoppelten Roboterbedienhandgeräts vorgegeben und sichergestellt.

Das Kopplungsglied und das Gegenkopplungsglied können eine Rastvorrichtung bilden, welche ausgebildet ist, ein Zusammenfügen des Kopplungsglieds und des Gegenkopplungsglieds in zwei oder mehreren verschiedenen, diskreten relativen Orientierungen zueinander zuzulassen. So können das Kopplungsglied und das Gegenkopplungsglied beispielsweise derart ausgebildet sein, dass das Roboterbedienhandgerät ausschließlich in jeweils genau um 180 Grad, oder jeweils genau um 90 Grad, oder jeweils genau um 45 Grad, oder jeweils genau um 30 Grad gedrehten Orientierungen an den Roboterarm, an das Werkzeug oder an das Werkstück angekoppelt werden kann.

Das manuelle Betätigungsglied der mehrdimensionalen Eingabevorrichtung kann einen Identifikations-Sensor aufweisen, der ausgebildet ist, in einem an den Roboterarm angekoppelten Zustand des Roboterbedienhandgeräts, insbesondere in einem zusammengefügten Zustand von Kopplungsglied und Gegenkopplungsglied, eine an einem Kodierelement des Roboterarms, des vom Roboterarm geführten Werkzeugs, des vom Roboterarm zu handhabenden Werkstücks oder des Gegenkopplungsglieds gespeicherte Information zu erfassen.

Das Kodierelement kann eine hinsichtlich des Koppelelements und/oder folglich auch hinsichtlich des Roboterarms als solches, hinsichtlich eines bestimmten Gliedes des Roboterarms, hinsichtlich des bestimmten Werkzeugs und/oder hinsichtlich des bestimmten Werkstücks, eine jeweilige individuelle Codierfläche aufweisen, die beispielsweise ein QR-Code sein kann, der auf einem Grundkörper beispielsweise mittels Aufdrucken, Aufkleben, Lasern und/oder Prägen aufgebracht sein kann.

Der Roboterarm, das vom Roboterarm geführte Werkzeug, das vom Roboterarm zu handhabenden Werkstück oder das Gegenkopplungsglied können einen Identifikations-Sensor aufweisen, der ausgebildet ist, in einem an den Roboterarm angekoppelten Zustand des Roboterbedienhandgeräts, insbesondere in einem zusammengefügten Zustand von Kopplungsglied und Gegenkopplungsglied, eine an einem Kodierelement des manuellen Betätigungsglieds der mehrdimensionalen Eingabevorrichtung gespeicherte Information zu erfassen.

Das Kodierelement kann mehrere pixelartige Markierungen, Vorsprünge oder Vertiefungen aufweisen, die in analoger oder digitaler Form eine den individuellen Roboterarm, das individuelle Werkzeug, das individuelle Werkstück, die mobile Plattform, woran das Kodierelement angeordnet ist, kennzeichnende Information enthalten.

Das Kodierelement kann mehrere pixelartige Markierungen, Vorsprünge oder Vertiefungen aufweisen, die in analoger oder digitaler Form eine die Position und/oder Orientierung des Gegenkopplungsglieds an dem Roboterarm, an dem Werkzeug oder an dem Werkstück, an der mobilen Plattform, woran kennzeichnende Information enthalten.

Der Identifikations-Sensor kann ein berührungslos aufnehmender Identifikations-Sensor, ein optischer Identifikations-Sensor, ein Magnetfeldsensor oder ein mittels elektromagnetischer Wellen kommunizierender Identifikations-Sensor sein. Der Identifikations-Sensor kann beispielsweise in der optischen Ausführung ein an sich bekannter Kamera-Chip sein, wie er beispielsweise in Smartphones und Tablet-Computer verwendet wird.

Eine erfindungsgemäße Kopplungsvorrichtung, die im Folgenden später auch als Koppelelement bezeichnet wird, weist eine Grundplatte auf, die eine Vorderseite aufweist, an der ein Gegenkopplungsglied angeordnet ist, das ausgebildet ist, zum Ankoppeln eines zum Gegenkopplungsglied korrespondierenden Kopplungsglieds, das an einem manuellen Betätigungsglied einer mehrdimensionalen Eingabevorrichtung eines Roboterbedienhandgeräts, insbesondere eines Roboterbedienhandgeräts nach einem der beschriebenen Ausführungsformen, angeordnet ist, derart, dass in einem an die Kopplungsvorrichtung angekoppelten Zustand des Roboterbedienhandgeräts, das manuelle Betätigungsglied mechanisch starr mit der Kopplungsvorrichtung verbunden ist, und aufweisend eine Rückseite mit einer Befestigungsfläche, die zum Befestigen der Kopplungsvorrichtung an einer Oberfläche eines Roboterarms, eines Glieds des Roboterarms, eines Werkzeugflansches des Roboterarms, eines vom Roboterarm geführten Werkzeugs oder eines vom Roboterarm zu handhabenden Werkstücks ausgebildet ist.

Erfindungsgemäß weist das Gegenkopplungsglied der Kopplungsvorrichtung einen Ringvorsprung auf, der eine Außenmantelwand und eine Innenmantelwand aufweist, derart, dass in einer Kopplungsanordnung des Gegenkopplungsglieds mit einem korrespondierenden Kopplungsglied eine Außenringwand des Kopplungsglieds an der Außenmantelwand des Gegenkopplungsglieds anliegt und eine Innenringwand des Kopplungsglieds an der Innenmantelwand des Gegenkopplungsglieds anliegt.

Die Kopplungsvorrichtung kann ein Kodierelement aufweisen, das mehrere pixelartige Markierungen, Vorsprünge oder Vertiefungen aufweist, die in analoger oder digitaler Form eine den individuellen Roboterarm, das individuelle Werkzeug, das individuelle Werkstück, an dem die Kopplungsvorrichtung anzuordnen ist, kennzeichnende Information enthalten und/oder das Kodierelement mehrere pixelartige Markierungen, Vorsprünge oder Vertiefungen aufweist, die in analoger oder digitaler Form eine die Position und/oder Orientierung des Gegenkopplungsglieds an dem Roboterarm, an dem Werkzeug oder an dem Werkstück, der mobilen Plattform, woran kennzeichnende Information enthalten. Die dadurch an der Kopplungsvorrichtung hinterlegten Informationen können beispielsweise sensorbasiert detektiert werden. Eine sensorbasierte Detektion kann beispielsweise an dem an die Kopplungsvorrichtung angekoppelten Roboterbedienhandgerät erfolgen. Auf Grundlage der detektierten Informationen kann festgestellt werden, welches Element, insbesondere welches Roboterbedienhandgerät an die Kopplungsvorrichtung momentan angekoppelt ist. Außerdem kann alternativ oder ergänzend vorgesehen sein, dass mittels des Kodierelements, insbesondere mittels der daran gespeicherten Informationen die relative Orientierung von Kopplungsvorrichtung zu angekoppelten Element, insbesondere angekoppelten Roboterbedienhandgerät erfasst werden kann. Auf Grundlage der so erfassten relativen Orientierung beispielsweise des an die Kopplungsvorrichtung angekoppelten Roboterbedienhandgeräts kann beispielsweise die Robotersteuerung die Eingabemittel des angekoppelten Roboterbedienhandgerät derart steuerungstechnisch einrichten, dass die richtungsabhängigen Eingabemittel so angesteuert sind, dass die auf das Roboterbedienhandgerät aufgebrachte manuellen Bewegungen eine gleichgerichtete automatische Bewegung des Roboterarms bewirken, an dem das Roboterbedienhandgerät über die Kopplungsvorrichtung angekoppelt ist. Die hier beschriebene Steuerungsweise kann auch in den weiteren im Folgenden hier beschriebenen Ausführungen der Kopplungsvorrichtung, insbesondere der entsprechenden Kodierelemente angewandt werden.

Die Aufgabe wird außerdem gelöst durch einen Roboter, aufweisend einen Roboterarm mit mehreren Gliedern und die Glieder gegeneinander verstellbar verbindenden Gelenken, die von Motoren angetrieben, durch eine Robotersteuerung des Roboters angesteuert verstellbar sind, gekennzeichnet durch ein oder mehrere Kopplungsvorrichtungen nach einem der beschriebenen Ausführungsformen.

Der Roboter kann ein Roboterbedienhandgerät nach einem der beschriebenen Ausführungsformen aufweisen, wobei die Robotersteuerung des Roboters eingerichtet ist, auf Grundlage von Sensorwerten, die durch den wenigstens einen Sensor des mehrdimensionalen Eingabemittels des Roboterbedienhandgeräts erfasst werden, die Gelenke des Roboterarms derart anzusteuern, dass der Roboterarm den Bewegungen einer Hand eines Benutzers, der auf den Handgriff des Roboterbedienhandgeräts einwirkt, folgt, wenn das Roboterbedienhandgerät mittels des Kopplungsglieds an einem Glied des Roboterarms, an einem vom Roboterarm geführten Werkzeug oder an einem vom Roboterarm zu handhabenden Werkstück angekoppelt ist.

Die Aufgabe der Erfindung wird außerdem gelöst durch ein Verfahren zum handgeführten Bewegen eines von einer Robotersteuerung gesteuerten, mehrere Glieder aufweisenden Roboterarms mittels eines steuerungstechnisch mit der Robotersteuerung verbundenen Roboterbedienhandgeräts, insbesondere Roboterbedienhandgerät nach einem oder mehreren der beschriebenen Ausführungsformen, bei dem das Roboterbedienhandgerät für eine Einhandbedienung einen Handgriff aufweist und wenigstens eine mehrdimensionale Eingabevorrichtung mit einem Betätigungsglied aufweist, mit den Schritten:
- Ausstatten wenigstens eines Gliedes des Roboterarms mit wenigstens einer Kopplungsvorrichtung, insbesondere einer Kopplungsvorrichtung nach einem oder mehreren der beschriebenen Ausführungsformen,
- Ausstatten des Betätigungsglieds der mehrdimensionalen Eingabevorrichtung des Roboterbedienhandgeräts mit einem zur Kopplungsvorrichtung korrespondierenden Kopplungsglied,
- Ankoppeln des Roboterbedienhandgeräts an das Glied des Roboterarms, indem das Kopplungsglied des Roboterbedienhandgeräts starr mit der Kopplungsvorrichtung des Roboterarms verbunden wird.

Eine Weiterbildung des Verfahrens sieht vor, dass im angekoppelten Zustand des Roboterbedienhandgeräts an dem Glied des Roboterarms eine Identifikation des momentan angekoppelten individuellen Roboterbedienhandgeräts erfolgt und eine das individuelle Roboterbedienhandgerät kennzeichnende Information an die Robotersteuerung übermittelt wird.

Alternativ oder ergänzend kann bei dem Verfahren vorgesehen sein, dass im angekoppelten Zustand des Roboterbedienhandgeräts an dem Glied des Roboterarms eine Identifikation der relativen Orientierung des momentan angekoppelten individuellen Roboterbedienhandgeräts bezüglich des Gliedes des Roboterarms, an welchem Glied das Roboterbedienhandgerät angekoppelt ist, erfolgt und eine die relative Orientierung kennzeichnende Information, insbesondere in Form eines Bezugskoordinatensystems, an die Robotersteuerung übermittelt wird.

Ergänzend kann vorgesehen sein, dass mittels der Robotersteuerung aufgrund der erhaltenen, die relative Orientierung kennzeichnenden Information, insbesondere in Form eines Bezugskoordinatensystems, die Freiheitsgrade der mehrdimensionalen Eingabevorrichtung an die Freiheitsgrade, in denen der Roboterarm mittels des angekoppelten Roboterbedienhandgeräts manuell bewegbar ist, angepasst, insbesondere räumlich übereinstimmend eingerichtet werden.

In allen Ausgestaltungen des Verfahrens kann die mehrdimensionale Eingabevorrichtung des Roboterbedienhandgeräts in seinen mehreren Dimensionen kraftsensitiv ausgebildet sein und der Roboterarm mittels der Robotersteuerung kraftgeregelt angesteuert werden und zwar in Abhängigkeit der von einem Benutzer während des manuellen Führens des Roboterarms mittels des angekoppelten Roboterbedienhandgeräts vom Benutzer über die mehrdimensionale Eingabevorrichtung auf den Roboterarm eingeleitetet Kräfte, auf Grundlage der an der mehrdimensionale Eingabevorrichtung erfassten und an die Robotersteuerung übermittelten Kräfte und Kraftrichtungen.

Die Erfindung beschreibt, ggf. unabhängig von dem bisher beschriebenen, mitunter anders als bisher ausgedrückt, somit ein innovatives Roboterbedienhandgerät, das zum Handführen eines Roboterarms ausgebildet ist.

Das Handführen von Robotern, d.h. das Handführen des mechanischen Teils des Roboters, also des Roboterarms gilt als die einfachste Art einen Roboter manuell zu bewegen. Dabei fasst der Nutzer, wie beispielsweise ein Roboterprogrammierer, ein zu führendes Glied des Roboterarms direkt mit seinen Händen an und bewegt dieses Glied intuitiv durch Krafteinwirkung, d.h. durch Drücken, Ziehen, Drehen, Schieben, und/oder Neigen des handhabenden Glieds, in die gewünschte Richtung oder Position. In der Regel wird vorzugsweise dasjenige Glied geführt, welches mit dem Werkzeugbezugspunkt (TCP) des Roboters direkt verbunden ist, wie beispielsweise ein Handflansch des Roboterarms, so dass die Pose des Endeffektors (Position und Orientierung des Handflansches oder eines daran befestigen Werkzeugs oder Greifers) direkt und gezielt beeinflusst werden kann. Dies kann somit beispielsweise der Handflansch, der Endeffektor oder das vom Roboterarm handzuhabende Bauteil selber sein.

Beispielsweise aufgrund von Sicherheitsvorschriften und einer nicht zu verachtende Gefahr für den Nutzer, muss zum Handführen stets ein betätigter, insbesondere dreistufiger Sicherheitstaster (Zustimmtaster) in sicherer Technik durch den Nutzer manuell betätigt werden und damit bestätigt werden, dass eine manuelle Roboterbewegung bewusst gewollt und beabsichtigt ist.

Derartige Zustimmtaster oder Zustimmschalter befinden sich in der Regel entweder gut erreichbar neben dem zu bewegenden Roboterglied, insbesondere neben dem Roboter, insbesondere an einem externen (stationären oder mobilen) Bediengerät, oder sie befinden sich direkt am Endeffektor des Roboterarms.

Ein externer Zustimmschalter hat jedoch immer den Nachteil, dass zwei Hände zum Führen benötigt werden, nämlich für das Zustimmen und separat dazu für das Führen des erfassten Gliedes des Roboterarms. Dafür kann die Handhaltung zum Führen ideal gewählt und je nach Roboterstellung auch variiert werden.

Hingegen im Falle eines Zustimmschalters am Roboterflansch kann mit einer Hand nur dann geführt werden, wenn der Nutzer räumlich und ergonomisch den Taster erreichen kann. Der Zustimmtaster, sowie die erforderliche Grifffläche erfordern jedoch zusätzlichen Bauraum und vergrößern den kritischen Abstand von Werkzeugbezugspunkt (TCP) und Flansch.

Ein Handführen erfordert im Allgemeinen die sensorische Erkennung und steuerungstechnische Auswertung der Bewegungseingabe. Eine Erkennung erfolgt üblicherweise in sechs Dimensionen. Hierzu können entweder Sensoren in den Kraftfluss des Roboters integriert werden, beispielsweise am Fuß, am Flansch und/der an einzelne Gliedern bzw. Gelenken, oder es werden die Sensoren parallel dazu angeordnet, wie beispielsweise eine 3D/6D-Maus am Flansch.

Ein Handführen mit Sensoren im Kraftfluss bietet den Vorteil einer integrierten Lösung, bei der Sensordaten zusätzlich zum Handführen auch noch für weitere Aufgaben genutzt werden können. So können die Sensoren beispielsweise Prozesskräfte messen und/oder Kollisionen erkennen. Allerdings sind derartige Lösungen meist sehr kostenintensiv und bewegen sich immer im Spannungsfeld zwischen hoher Sensitivität bzw. Feinfühligkeit und hoher Steifigkeit bzw. Genauigkeit. Dafür ist der Krafteinleitungspunkt nicht von Belang, sofern der Krafteinleitungspunkt in der kinematischen Kette des Roboterarms distal vor dem Sensor liegt. Mit anderen Worten kann der Roboterarm an verschiedenen Stellen seiner Struktur, d.h. an unterschiedlichen Gliedern geführt werden.

Bei einem Handführen mit parallel angeordneten Sensoren liegt der jeweilige Sensor nicht mit Kraftfluss des Roboters und kann damit deutlich weicher und feinfühliger ausgeführt werden. Üblicherweise werden hier 3D/6D-Mäuse am Flansch oder am Tool des Roboterarms eingesetzt. Diese benötigen einen entsprechenden Bauraum und sind je nach Roboterstellung nicht ideal zu erreichen.

Ein Ziel der Erfindung ist es, das Handführen zu verbessern, indem ein neuartiges Roboterbedienhandgerät vorgeschlagen wird. Mit einem solchen Roboterbedienhandgerät kann ein manuelles Führen des Roboterarms mit nur einer einzigen Hand erfolgen.

Gleichzeitig kann, ohne Umgreifen, ein Eingabemittel zur Bestätigung und/oder Zustimmung betätigt werden und/oder eine weitere Betätigung eines Programmiertasters zur Aufzeichnung der handgeführten Bewegungssequenz des Roboterarms ermöglicht werden.

Das Roboterbedienhandgerät kann an vielen unterschiedlichen Stellen am Roboterarm, und wahlweise auch direkt am Werkstück verwendet werden.

Das Roboterbedienhandgerät kann roboter- und roboterart-übergreifend eingesetzt werden. SO beispielsweise im Wechsel an einem Industrieroboter, an einer mobile Roboterplattform und/oder an einem mobilen Roboter, d.h. es kann zwischen Robotern gewechselt werden und dabei stets dasselbe Roboterbedienhandgerät zum manuellen Führen verwendet werden.

Eine Vielzahl an weiteren wichtigen und hilfreichen Funktionen können mittels des Roboterbedienhandgeräts mit sich geführt werden und auch weitere Eingabe- und Steuerungsarten ermöglicht werden. Ein Handführen von allen Roboterklassen wird dadurch ermöglicht. Man ist außerdem auf keine zusätzlichen, kostenintensiven Sensoren angewiesen.

Bei dem vorliegenden innovativen Handführen wird eine 3D/6D-Maus oder ein Joystick des Roboterbedienhandgeräts als kraftsensitives Eingabemittel zum Handführen genutzt und zwischen dem zu führenden Roboterteil und dem Handgriff des Roboterbedienhandgeräts positioniert, indem die 3D/6D-Maus oder ein Joystick des Roboterbedienhandgeräts stirnseitig, d.h. kopfseitig des Steuerknüppels der 3D/6D-Maus oder des Joysticks temporär für die Dauer des manuellen Handführens mit wenigstens einem speziellen Koppelelement, das an einem Glied des Roboterarms befestigt ist, verbunden wird. Dieses Koppelelement kann als ein separates Bauteil, also getrennt vom Roboterarm hergestellt sein und kann auf eine (beliebige) ausgewählte Stelle an einem Glied des Roboterarms ausgerichtet und insbesondere dauerhaft fixiert werden. Der Handgriff des Roboterbedienhandgeräts bietet während der Roboterführung auch die Zustimm- und Teachfunktionen. Dabei kann die neuartige 3D/6D-Maus über den grundlegenden 3D/6D-Kraftsensor hinaus außerdem noch eine zusätzliche Koppelschnittstelle aufweisen, welche die folgenden Elemente beinhalten kann:
- Ein Formelement, insbesondere eine Aussparung, insbesondere eine zylindrische Aussparung, die dadurch gekennzeichnet ist, dass sie in Radialrichtung über ihre Mantelfläche eine Gegenfläche formschlüssig aufnehmen kann.
- Ein Halteelement, das kraft- und/oder formschlüssig ausgebildet sein kann, beispielsweise aber auch als Magnet ausgeführt sein kann, insbesondere in Ringform zum Aufbringen und Aufrechterhalten einer Koppelkraft. Bei Überschreiten dieser Kraft werden die Koppelpartner wieder getrennt. Weitere alternative Halteelemente können auf gefedertes Verrasten oder Verriegeln beispielsweise mittels Schnapphaken basieren.
- Ein Sensor, insbesondere ein optischer Sensor, insbesondere einfache und sehr kostengünstige Mikrokameras, speziell mit Makrolinse und zusätzliche Beleuchtung, kann zur Detektion des Koppelelements und der Koppelausrichtung, bei frei wählbarer Koppelorientierung um Längsachse der 3D/6D-Maus) vorgesehen sein. Weitere Alternativen zur Winkel- und ID-Erkennung sind möglich, beispielsweise durch RFID-Tags, Magnetfeldauswertung oder spezielle Taster.

Darüber hinaus kann die Gegenseite der Koppelverbindung, das sogenannte Koppelelement, folgende Merkmale aufweisen:
- Einen einfachen und somit kostengünstigen Grundkörper, insbesondere als ein Kunststoff-Spritzgussteil.
- Eine ebene Unterseite als Befestigungsfläche mit Eignung zum Kleben auf Glieder des Roboterarms, insbesondere solche, die bereits mit selbstklebender Folie ausgestattet sind.
- Ein oder mehrere Formelemente, wie beispielsweise gerade Außenkanten, Pfeile und/oder Markierungen zum sauberen manuellen Ausrichten am betreffenden Glied des Roboterarms.
- Ein oder mehrere Koppelformelemente, die so ausgeführt sein können, dass es einen Gegenpart zur Formelementfläche an der 3D/6D-Maus darstellen, und die ggf. mit Fügehilfen, wie Fasen, ausgestattet sind.
- Eine metallische, eisenhaltige Platte, die ausgeführt ist, als eingeklebter, formschlüssig eingeclipster und/oder eingegossener Einleger in den Kunststoffgrundkörper, um eine Koppelkraft über Magnetfeld zu erzeugen. Dieses Merkmal kann auch anders ausgeprägt sein, insbesondere falls eine alternative Koppelart gewählt wird.
- eine hinsichtlich des Koppelelements individuelle Codierfläche, beispielsweise ein QR-Code, der auf dem Grundkörper beispielsweise mittels Aufdrucken, Aufkleben, Lasern und/oder Prägen aufgebracht sein kann. Dieses Merkmal kann auch anders ausgeprägt sein, insbesondere falls eine alternative Detektionsart ausgewählt wird.

Beim Koppeln kann die 3D/6D-Maus auf das Koppelelement geschoben werden. Dadurch zentrieren sich die aufeinander angepassten Formelemente, die Koppelpartner und sperren vier Freiheitsgrade. Berührt beispielsweise der Magnet die Gegenseite und damit die Metallplatte oder den Kunststoff über einer eingelassenen Metallplatte, so zieht die Magnetkraft die Koppelpartner zusammen. Die axiale Position ist dann über den stirnseitigen Flächenkontakt des Magneten definiert. Weitere axiale Berührungen sollten vorzugsweise nicht stattfinden, damit eine Doppelpassung vermieden wird.

Der letzte noch offene Freiheitsgrad ist die Drehung um die Maus-Längsachse, d.h. um die Joystick-Langsachse. Diese Orientierung kann entweder beliebig und stufenlos vom Nutzer gewählt werden, beispielsweise in Form von zylindrischen Fügepartnern. Nach Kopplung wird die 3D/6D-Maus durch die Reibkraft, beispielsweise unterstützt durch die Magnetkraft, in ihrer Relativ-Orientierung gehalten und kann nicht unbeabsichtigt verrutschen. Die z.B. kamerabasierte Detektionsvorrichtung erkennt die gewählte Lage.

Alternativ kann der letzte noch offene Freiheitsgrad beliebig und diskret vom Nutzer gewählt werden, beispielsweise in Form von polygonartigen oder speziell geformten Fügepartnern. Nach Kopplung wird die 3D/6D Maus durch den Formschluss in ihrer Relativ-Orientierung gehalten und kann sich nicht unbeabsichtigt verdrehen. Die z.B. kamerabasierte Detektionsvorrichtung erkennt die gewählte Lage.

Der letzte noch offene Freiheitsgrad kann aber auch fest und eindeutig vom Koppelelement vorgegeben werden, z.B. durch speziell geformte Fügepartner. Es gibt in diesem Fall nur eine Koppelmöglichkeit. Hier muss nur detektiert werden, dass angekoppelt wurde und mit wem gekoppelt wurde, hingegen nicht in welchem Winkel.

Das Koppelelement kann fest und definiert auf dem zu bewegenden Roboterteil lösbar angebracht werden. Dies kann in folgenden Schritten erfolgen.

Zunächst kann ein Ausrichten an geometrischen Merkmalen erfolgen, z.B. um Tool-Koordinaten, Richtungen und/oder Koppelelement-Richtungen abzugleichen. Diese Ausrichtung muss nicht hoch genau sein, da sie lediglich die Achsen des Handführens festlegen und nicht diejenigen des Roboters. Der Nutzer kann hier kleine Ungenauigkeiten, wie z.B. Winkelfehler von ein paar Grad, selber durch seine senso-motorischen Fähigkeiten ausgleichen.

Dann kann ein Fixieren auf dem Roboterteil z.B. durch Aufkleben erfolgen.

Anschließend erfolgt ein Erfassen und Abspeichern der Identität des Koppelelements und dessen Pose auf dem Roboterteil in der Steuerung. Hier können zusätzliche Markierungen auf dem Koppelelement einer einfacheren Vermessung der Pose des Koppelelements dienen. Werden die Koppelelemente werksseitig bereits aufgebracht, sind auch automatische Vermessungs- und Justageabläufe möglich.

Gegebenenfalls kann dann noch nachträglich ein Optimierung und Anpassung der Lageparameter in der Steuerung stattfinden.

Durch einfaches Koppeln erkennt das Roboterbedienhandgerät das jeweilige Koppelelement am Roboterarm und übernimmt sein entsprechend hinterlegtes Koordinatensystem, z.B. das Werkzeug-Koordinatensystem, falls das Koppelelement am Werkzeug oder am Roboterflansch befestigt ist. Damit sind alle Achsen der 3D/6D-Maus automatisch fest definiert. Die Bewegungsachsen müssen dabei nicht mit den Hauptachsen der 3D/6D-Maus übereinstimmen. So ist auch ein verdrehtes Handführ- Koordinatensystem möglich bzw. sogar wahrscheinlich. Einzig der Ursprung des Koordinatensystems kann vom Nutzer gewählt werden, indem dieser über einen einfachen Tastendruck bestätigt. Dieser Ursprung definiert nur das Drehzentrum und nicht die Bewegungsachsen und Bewegungsrichtungen. Beispielsweise ist ein zentraler Drehpunkt im Werkzeugbezugspunkt sinnvoll, sowie im Zentrum der 3D/6D-Maus, beides jeweils mit Drehachsen um die bereits definierten Koordinatenachsen des Werkzeugs.

Durch einfachen Wechsel zwischen zwei am gleichen Roboterteil befindlichen Koppelelementen, bleiben alle Bewegungsrichtungen und Handführeigenschaften erhalten. Gegebenenfalls wird der Drehpunkt versetzt, bei Drehzentrum in der 3D/6D-Maus. Dies kann sehr hilfreich sein, wenn die Roboterführung über das Roboterbedienhandgerät zu Kollisionen führen würde oder das Roboterbedienhandgerät ungünstig bzw. unergonomisch vom Nutzer zu erreichen ist. Durch ein schnelle umsetzten des Roboterbedienhandgeräts kann der Roboterprogrammiervorgang nahezu ohne Zeitverlust fortgeführt werden.

Auch kann das Roboterbedienhandgerät um die Maus-Längsachse verdreht werden, um die Ergonomie, die Erreichbarkeit und/oder eine Kollisionsfreiheit zu verbessern. Hierzu muss das Roboterbedienhandgerät lediglich kurz entkoppelt und in der gewünschten verdrehten Pose wieder angekoppelt werden. Die Detektionseinheit erkennt die geänderte Lage und passt die Maus-Achsen entsprechend automatisch an.

Wie schon beschrieben kann ein robotisches System mehrere bzw. eine Vielzahl dieser Koppelelemente aufweisen. Hierdurch stehen dem Nutzer nicht nur praktischer Weise viele geometrisch unterschiedliche Koppelmöglichkeiten zur Verfügung, sondern beispielsweise auch zugleich unterschiedliche Funktionen, je nach Koppelelement.

So können Koppelelemente auf unterschiedlichen Roboterteilen, d.h. Robotergliedern, wie beispielsweise Werkzeug, Flansch, Fuß, mobile Plattform usw. mit verschieden Funktionen, insbesondere bezüglich der Freiheitsgrade, verknüpft werden. Koppelt der Nutzer das Roboterbedienhandgerät beispielsweise mit dem Werkzeug eines auf einer mobilen Plattform befindlichen Roboters, so kann er beispielsweise je nach Auswahl nur den Roboter in sechs Freiheitsgraden führen, während die Plattform in Ruhe verweilt oder er kann den Roboter zusammen mit der Plattform in gewisser Kombination bewegen. Wird hingegen ein Koppelelement auf der mobilen Plattform verbunden, so dient das Roboterbedienhandgerät beispielsweise ausschließlich zur dreidimensionalen Bewegung der Plattform, während der Roboter und seine Pose fixiert wird. Zudem kann der Nutzer auch eine Nullraumbewegung wählen, um die Pose des Werkzeugbezugspunktes im Raum zu halten, während der Nutzer die Plattform frei mit seiner Hand führt.

Als letztes Beispiel der hohen Leistungsfähigkeit dieses neuartigen Bedienkonzeptes sei hier noch aufzuführen, dass die Koppelelemente natürlich auch auf dem Werkstück selber aufgebracht werden können. Dies macht besonders dann Sinn, wenn dieses Werkstück sehr groß und unförmig ist, sodass der Nutzer das Werkzeug räumlich nicht erreichen kann oder das Werkzeug keine geeigneten Möglichkeiten einer Fixierung bietet. Dabei muss nicht jedes Werkstück beklebt werden, sondern es kann beispielsweise lediglich ein Musterwerkstück beklebt werden, welches zum Einrichten und Programmieren des Roboterprozesses herangezogen wird. Der Nutzer kann nun auf einfachste Art und Weise das Werkstück im entsprechenden Koordinatensystem, z.B. im Werkstück-Koordinatensystem frei und sicher bewegen. Die Führungsbewegung dient dabei der Bewegungsvorgabe, die zur Steuerung eines oder mehrerer Roboter genutzt werden kann.

Die hier vorgestellte Erfindung offenbart eine Reihe an innovativen Neuerungen, um das Handführen von Robotern nochmals deutlich zu vereinfachen. Es basiert im Sinne einer Sonderausführung oder eines Zubehörs auf einem insbesondere universell einsetzbaren Roboterbedienhandgerät, das optional auch einen Tablet-Computer mit umfassen kann, und lässt sich hervorragend integrieren. Es bietet maximale Flexibilität und Komfort beim manuellen Führen eines Roboters und ist nicht nur für sämtliche Roboterklassen und Robotergrößen, sondern auch auf unterschiedliche Roboterarten anwendbar, vom großen stationären Industrieroboter, über einen kleinen mobilen Roboter, bis hin zur einzelnen mobilen Plattformen.

Verschiedene Ausführungsbeispiele der Erfindung sind exemplarisch in den beigefügten schematischen Zeichnungen dargestellt.

Es zeigen:
- Fig. 1: eine perspektivische Darstellung eines beispielhaften Roboterbedienhandgeräts mit einem erfindungsgemäßen Kopplungsglied,
- Fig. 2: eine perspektivische, schematische Teilansicht des Roboterbedienhandgeräts gemäß Fig.1 im Bereich des erfindungsgemäßen Kopplungsglieds,
- Fig. 3: eine perspektivische Darstellung einer erfindungsgemäßen Kopplungsvorrichtung, die ein zum Kopplungsglied des Roboterbedienhandgeräts gemäß Fig.1 korrespondierenden Gegenkopplungsglied aufweist,
- Fig. 4: eine perspektivische Teilansicht eines Roboterarms, der an einem seiner Glieder eine Kopplungsvorrichtung gemäß Fig. 3 aufweist,

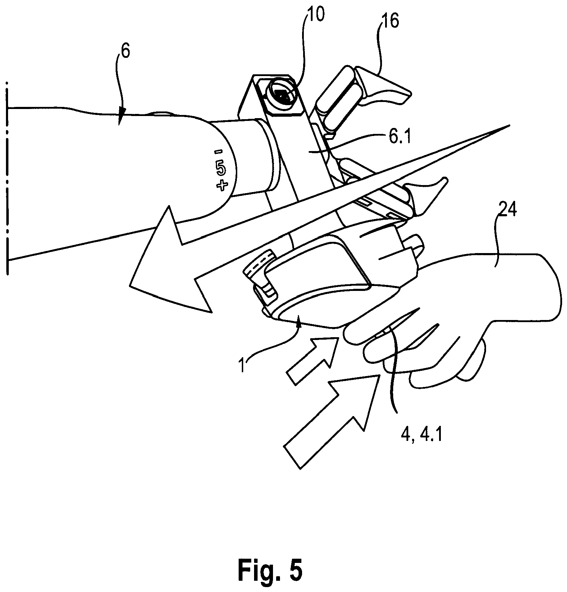

- Fig. 5: eine perspektivische Teilansicht eines Roboterarms, der an einem seiner Glieder eine Kopplungsvorrichtung gemäß Fig. 3 aufweist mit einem angekoppelten Roboterbedienhandgerät gemäß Fig.1,
- Fig. 6: eine schematische Schnittdarstellung durch die Kopplungsvorrichtung und durch das Kopplungsglied vor einem Ankoppeln,
- Fig. 7: eine schematische Schnittdarstellung durch die Kopplungsvorrichtung und durch das Kopplungsglied in einem angekoppelten Zustand,
- Fig. 8-12: verschiedene Bedienszenarien, bei denen der Roboterarm mittels des Roboterbedienhandgeräts in einem Handfahrbetrieb bewegt werden kann,
- Fig. 13: ein spezielles Bedienszenario, bei dem ein mobiler Roboterarm durch manuelles Handverfahren an seinem Werkzeugflansch bewegt werden kann,
- Fig. 14: ein anderes Bedienszenario, bei dem eine mobile Fahrplattform durch manuelles Handverfahren örtlich verfahren werden kann, und
- Fig. 15: ein weiteres Bedienszenario, bei dem ein Werkstück, das von zwei kooperierenden Roboterarmen getragen wird, durch manuelles Handverfahren unmittelbar bewegt werden kann.

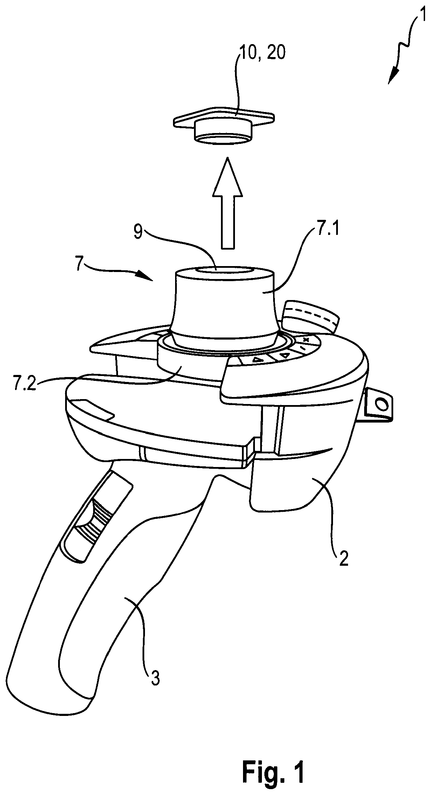

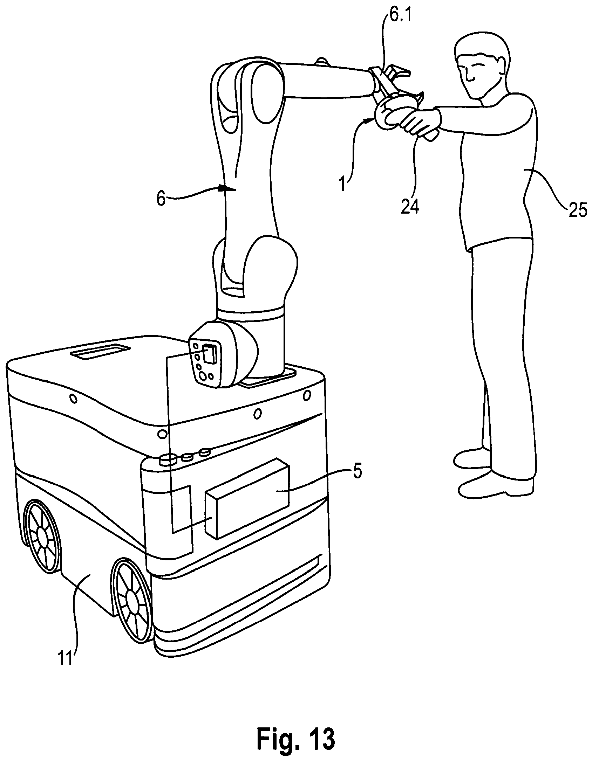

Die Fig. 1 zeigt eine beispielhafte Ausführungsform eines erfindungsgemäßen Roboterbedienhandgeräts 1. Das Roboterbedienhandgerät 1 weist ein manuell tragbares Gehäuse 2 und einen am manuell tragbaren Gehäuse 2 befestigten Handgriff 3 auf. Mittels des Handgriffs 3 ist eine Einhandführung und eine Einhandbedienung des Roboterbedienhandgeräts 1 möglich. Dazu ist ein für eine Einhandbedienung in einer einhandgriffweite zu dem Handgriff 3 am Gehäuse 2 angeordnetes Eingabemittel 4 vorgesehen, das ausgebildet ist, eine Zustimmeinrichtung 4.1 zu bilden, bei deren Aktivierung eine mit dem Roboterbedienhandgerät 1 steuerungstechnisch verbundene Robotersteuerung 5 (Fig. 13) ein handgeführtes Bewegen eines von der Robotersteuerung 5 gesteuerten Roboterarms 6 (Fig. 13) zulässt und bei einer Deaktivierung der Zustimmeinrichtung 4.1 die mit dem Roboterbedienhandgerät 1 steuerungstechnisch verbundene Robotersteuerung 5 ein handgeführtes Bewegen des von der Robotersteuerung 5 gesteuerten Roboterarms 6 unterbindet.

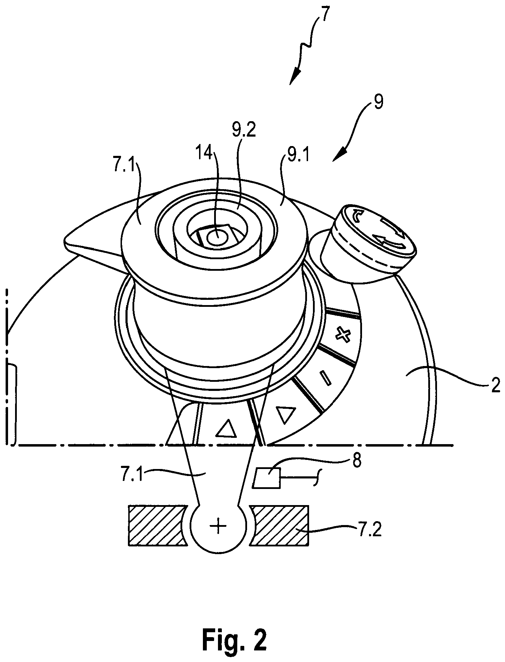

Das Roboterbedienhandgerät 1 weist des Weiteren eine am manuell tragbaren Gehäuse 2 angeordnete, mehrdimensionale Eingabevorrichtung 7 auf, die ein manuelles Betätigungsglied 7.1 aufweist, das in den mehreren Dimensionen bewegbar an einem Basiskörper 7.2 der mehrdimensionalen Eingabevorrichtung 7 gelagert ist, wobei die mehrdimensionale Eingabevorrichtung 7 wenigstens einen Sensor 8 (Fig. 2) aufweist, der ausgebildet ist, eine Bewegung des manuellen Betätigungsglieds 7.1 relativ zum Basiskörper 7.2 in den mehreren Dimensionen zu erfassen, und der Basiskörper 7.2 starr im manuell tragbaren Gehäuse 2 befestigt ist.

Das Roboterbedienhandgerät 1 weist erfindungsgemäß, wie beispielsweise in Fig. 13 illustriert ist, ein zum manuellen Handführen des Roboterarms 6 durch manuelles Einwirken auf den Handgriff 3 des an den Roboterarm 6 mechanisch gekoppelten Roboterbedienhandgeräts 1 ausgebildetes, am manuellen Betätigungsglied 7.1 der mehrdimensionalen Eingabevorrichtung 7 des Roboterbedienhandgeräts 1 angeordnetes Kopplungsglied 9 auf, das ausgebildet ist, in einem an den Roboterarm 6 angekoppelten Zustand des Roboterbedienhandgeräts 1, das manuelle Betätigungsglied 7.1 mechanisch starr mit einem Glied 6.1 des Roboterarms 6 zu verbinden.

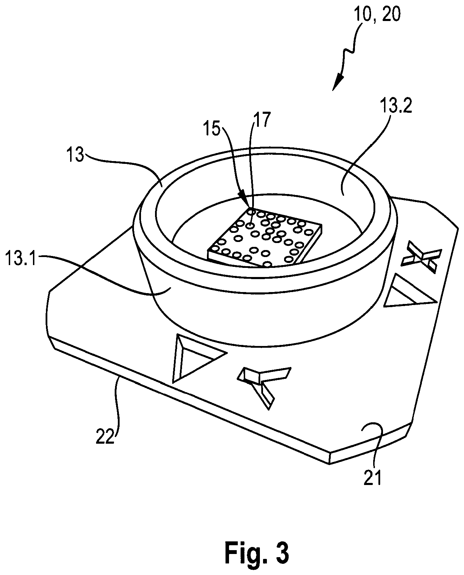

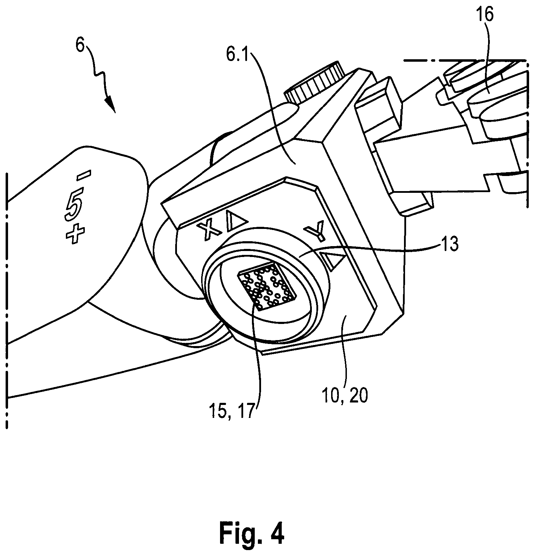

Wie insbesondere in Fig. 2 näher gezeigt ist, ist das Kopplungsglied 9 ausgebildet, im Falle des vorliegenden Ausführungsbeispiels zur formschlüssigen Verbindung mit einem zum Kopplungsglied 9 korrespondierenden Gegenkopplungsglied 10, das in Fig. 3 in Alleinstellung näher dargestellt ist. Das Gegenkopplungsglied 10 kann in einer ersten Fallgestaltung, wie beispielsweise in Fig. 4 gezeigt ist, an einem Glied 6.1 des Roboterarms 6 befestigt sein.

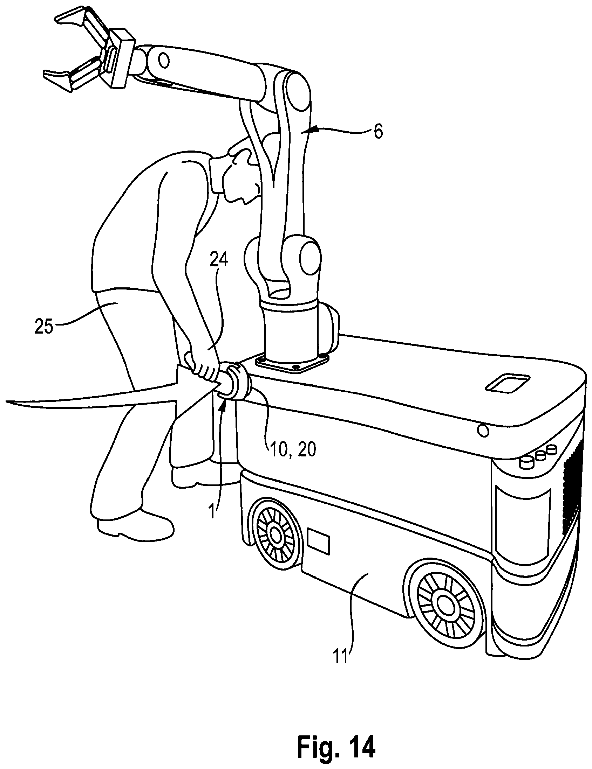

In einer zweiten Fallgestaltung, wie beispielsweise in Fig. 14 gezeigt ist, kann das Gegenkopplungsglied 10 an einer den Roboterarm 6 tragenden mobilen Plattform 11 befestigt sein.

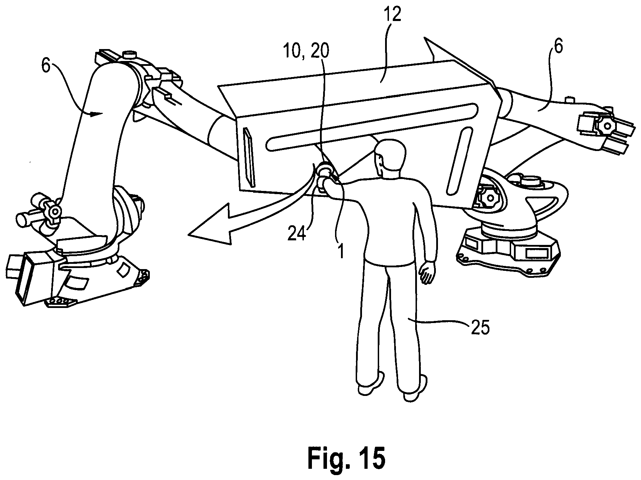

In einer dritten Fallgestaltung, wie beispielsweise in Fig. 15 gezeigt ist, kann das Gegenkopplungsglied 10 an einem vom Roboterarm 6 oder kooperierend von einem zusätzlichen Roboterarm 6 gemeinsam zu handhabenden Werkstück 12 befestigt sein.

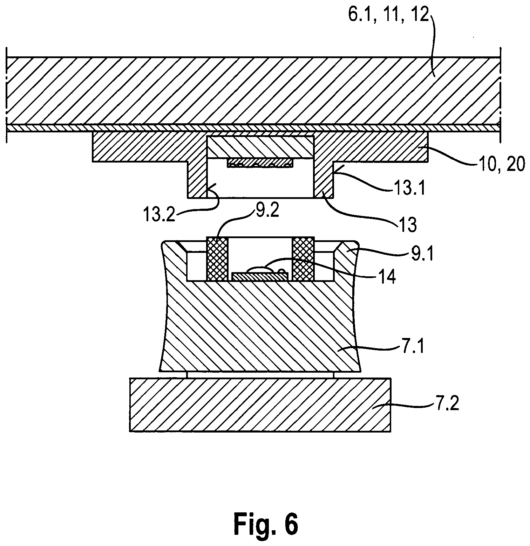

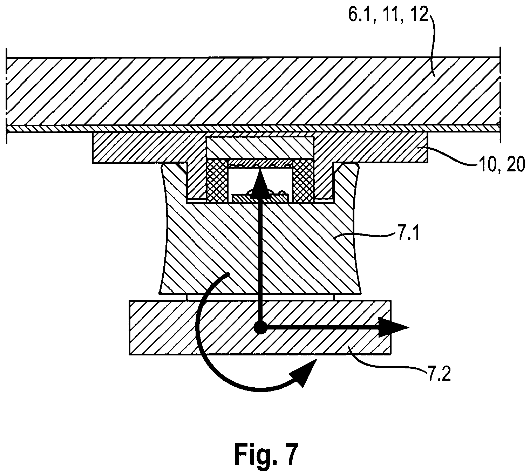

Wie insbesondere in Fig. 2 und Fig. 6 ersichtlich ist, weist das Gegenkopplungsglied 10 im Falle des vorliegenden Ausführungsbeispiels einen Ringvorsprung 13 auf, der eine Außenmantelwand 13.1 und eine Innenmantelwand 13.2 aufweist. Das Kopplungsglied 9 weist dazu korrespondierend eine Außenringwand 9.1 und eine Innenringwand 9.2 auf, derart, dass in einer Kopplungsanordnung von Kopplungsglied 9 und Gegenkopplungsglied 10, wie beispielsweise in Fig. 7 aufgezeigt ist, die Außenringwand 9.1 des Kopplungsglieds 9 an der Außenmantelwand 13.1 des Gegenkopplungsglieds 10 anliegt und die Innenringwand 9.2 des Kopplungsglieds 9 an der Innenmantelwand 13.2 des Gegenkopplungsglieds 10 anliegt.

Das Kopplungsglied 9 und das Gegenkopplungsglied 10 bilden im Falle des vorliegenden Ausführungsbeispiels eine Rastvorrichtung, welche ausgebildet ist, ein Zusammenfügen des Kopplungsglieds 9 und des Gegenkopplungsglieds 10 in mehreren verschiedenen, diskreten relativen Orientierungen zueinander zuzulassen.

Das manuelle Betätigungsglied 7.1 der mehrdimensionalen Eingabevorrichtung 7 weist im Falle des vorliegenden Ausführungsbeispiels einen Identifikations-Sensor 14 auf, der ausgebildet ist, in einem an den Roboterarm 6 angekoppelten Zustand des Roboterbedienhandgeräts 1, insbesondere in einem zusammengefügten Zustand von Kopplungsglied 9 und Gegenkopplungsglied 10, eine an einem Kodierelement 15 des Roboterarms 6, des vom Roboterarm 6 geführten Werkzeugs 16 , des vom Roboterarm 6 zu handhabenden Werkstücks 12 oder des Gegenkopplungsglieds 10 gespeicherte Information zu erfassen.

Das Kodierelement 15 ist im Falle des vorliegenden Ausführungsbeispiels an dem Gegenkopplungsglied 10 angeordnet, das seinerseits entweder an einem Glied 6.1 des Roboterarms 6, an einer sonstigen Stelle des Roboterarms 6, an dem vom Roboterarm 6 geführten Werkzeug 16, an dem vom Roboterarm 6 zu handhabenden Werkstück 12 oder an der mobilen Plattform 11 befestigt ist bzw. befestigt sein kann.

Demgemäß kann in einer umgekehrten, nicht in den Figuren dargestellten Konstruktionsvariante, nicht nur der Roboterarm 6 oder das Gegenkopplungsglied 10, sondern auch das vom Roboterarm 6 geführte Werkzeug 16, das vom Roboterarm 6 zu handhabenden Werkstück 12 statt des Kodierelements 15 den Identifikations-Sensor 14 aufweisen, der ausgebildet ist, in einem an den Roboterarm 6 angekoppelten Zustand des Roboterbedienhandgeräts 1, insbesondere in einem zusammengefügten Zustand von Kopplungsglied 9 und Gegenkopplungsglied 10, eine an dem Kodierelement 15, das in dieser Konstruktionsvariante dann statt des Identifikations-Sensors 14 an dem manuellen Betätigungsglied 7.1 der mehrdimensionalen Eingabevorrichtung 7 angeordnet ist, gespeicherte Information zu erfassen.

In allen Varianten kann das Kodierelement 15, wie insbesondere in Fig. 3 dargestellt ist, mehrere pixelartige Markierungen 17, Vorsprünge oder Vertiefungen aufweisen, die in analoger oder digitaler Form eine den individuellen Roboterarm 6, das individuelle Werkzeug 16, das individuelle Werkstück 12, die individuelle mobile Plattform 11, woran das Kodierelement 15 angeordnet ist, kennzeichnende Information enthalten.

Auch dieses Kodierelement 15 kann mehrere pixelartige Markierungen 17, Vorsprünge oder Vertiefungen aufweisen, die in analoger oder digitaler Form eine die Position und/oder Orientierung des Gegenkopplungsglieds 10 an dem Roboterarm 6, an dem Werkzeug 16 oder an dem Werkstück 12, an der mobilen Plattform 11 kennzeichnende Information enthalten.

Der Identifikations-Sensor 14 kann ein berührungslos aufnehmender Identifikations-Sensor, ein optischer Identifikations-Sensor, ein Magnetfeldsensor oder ein mittels elektromagnetischer Wellen kommunizierender Identifikations-Sensor sein.

Insbesondere die Fig. 3 zeigt eine beispielhafte Ausführungsform einer Kopplungsvorrichtung 20 in Alleinstellung. Die Kopplungsvorrichtung 20 weist eine Grundplatte 21 auf, die eine Vorderseite aufweist, an der das Gegenkopplungsglied 10 angeordnet ist. Das Gegenkopplungsglied 10 ist ausgebildet, zum Ankoppeln des zum Gegenkopplungsglied 10 korrespondierenden Kopplungsglieds 9, das an dem manuellen Betätigungsglied 7.1 der mehrdimensionalen Eingabevorrichtung 7 des Roboterbedienhandgeräts 1 angeordnet ist. Die Kopplungsvorrichtung 20 weist außerdem eine Rückseite mit einer Befestigungsfläche 22 auf, die zum Befestigen der Kopplungsvorrichtung 20 an einer Oberfläche des Roboterarms 6, des Glieds 6.1 des Roboterarms 6, eines Werkzeugflansches des Roboterarms 6, des vom Roboterarm 6 geführten Werkzeugs 16 , des vom Roboterarm 6 zu handhabenden Werkstücks 12 oder der den Roboterarm 6 tragenden mobilen Plattform 11 ausgebildet ist.

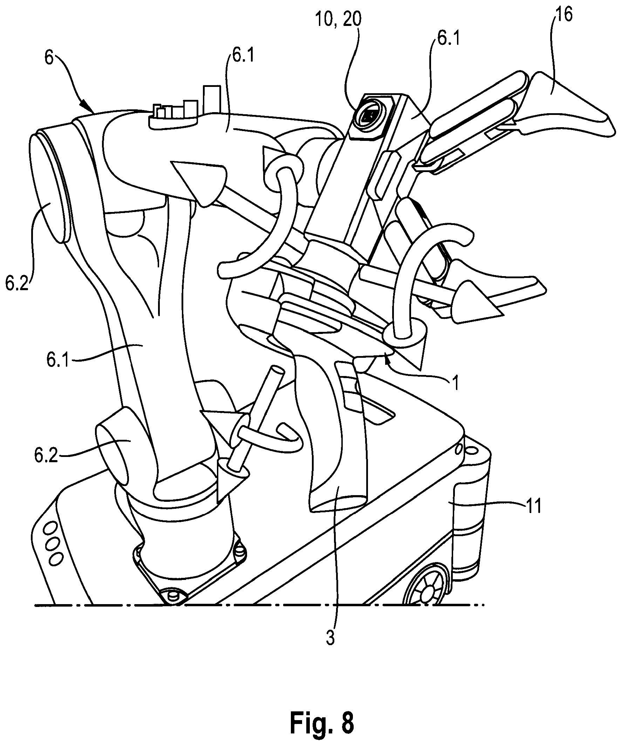

In Fig. 8 bis Fig. 12 sind verschiedene Bedienszenarien dargestellt. Gezeigt ist jeweils eine fahrbare, d.h. mobile Plattform 11, welche die Robotersteuerung 5 enthält und auf der ein Roboterarm 6 aufgesetzt ist, so dass der Roboterarm 6 mittels der mobilen Plattform 11 ortsbeweglich, d.h. herumfahrbar ausgebildet ist.

Der so gebildete Roboter weist den Roboterarm 6 mit mehreren Gliedern 6.1 und die Glieder 6.1 gegeneinander verstellbar verbindende Gelenke 6.2 auf, die von Motoren angetrieben, durch eine Robotersteuerung 5 des Roboters angesteuert verstellbar sind.

Die Robotersteuerung 5 des Roboters ist eingerichtet, auf Grundlage von Sensorwerten, die durch den wenigstens einen Sensor 8 des mehrdimensionalen Eingabemittels 7 des Roboterbedienhandgeräts 1 erfasst werden, die Gelenke 6.2 des Roboterarms 6 derart anzusteuern, dass der Roboterarm 6 den Bewegungen einer Hand 24 eines Benutzers 25 (Fig. 13), der auf den Handgriff 3 des Roboterbedienhandgeräts 1 einwirkt, folgt, wenn das Roboterbedienhandgerät 1 mittels des Kopplungsglieds 9 an einem Glied 6.1 des Roboterarms 6, an einem vom Roboterarm 6 geführten Werkzeug 16 oder an einem vom Roboterarm 6 zu handhabenden Werkstück 12 angekoppelt ist.

In einem ersten Bedienszenario gemäß Fig. 8 sind die translatorischen Achsrichtungen (Freiheitsgrade, Dimensionen) fest an das Kopplungsglied 9 gebunden und bleiben daher stets erhalten. Die rotatorischen Freiheitsgrade um die Achsrichtungen können jedoch frei gewählt werden. In dem ersten Bedienszenario gemäß Fig. 8 sind die rotatorischen Freiheitsgrade in die Kopplungsstelle gelegt, an der das Kopplungsglied 9 an das Gegenkopplungsglied 10 angekoppelt ist.

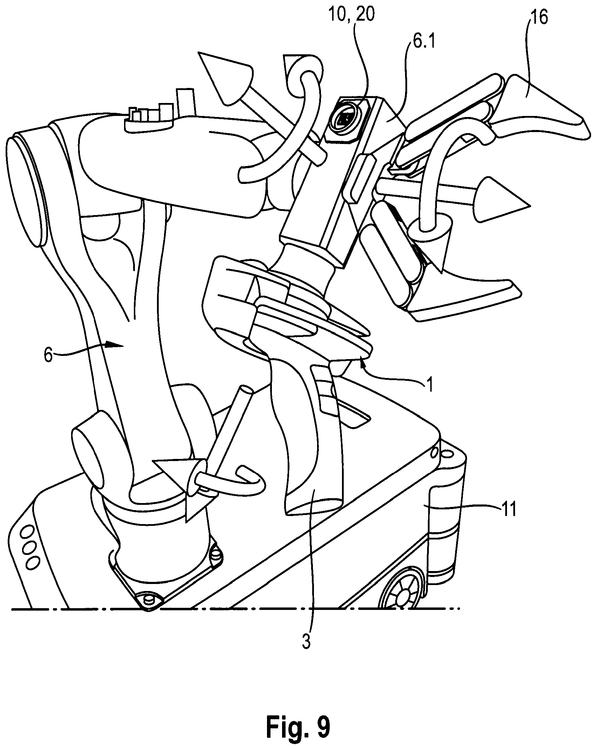

In einem zweiten Bedienszenario gemäß Fig. 9 sind die translatorischen Achsrichtungen (Freiheitsgrade, Dimensionen) auch fest an das Kopplungsglied 9 gebunden und bleiben daher stets erhalten. Die rotatorischen Freiheitsgrade um die Achsrichtungen können jedoch frei gewählt werden. In diesem zweiten Bedienszenario gemäß Fig. 9 sind die rotatorischen Freiheitsgrade in einen Handwurzelpunkt des Roboterarms 6 gelegt, der einen Werkzeugbezugspunkt (Tool-Center-Point / TCP) für das an dem Flansch des Roboterarms 6 befestigte Werkzeug 16 bilden kann.

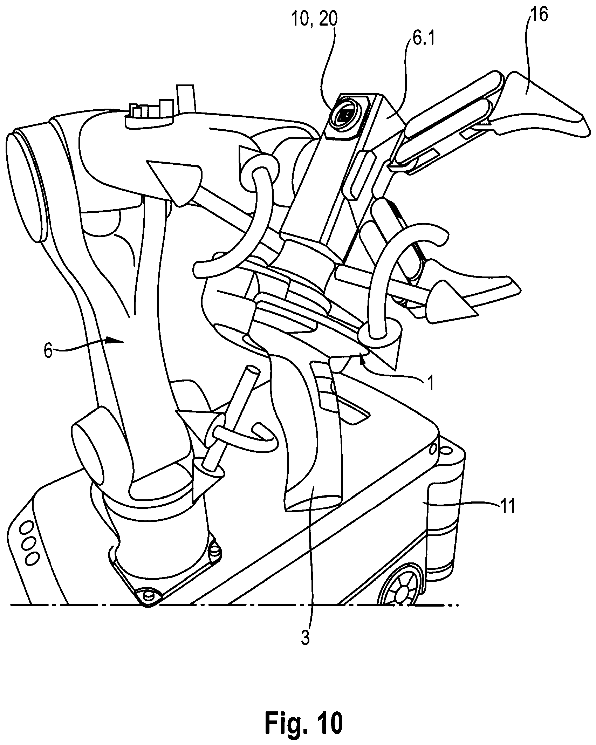

In einem dritten Bedienszenario gemäß Fig. 10 ist das Roboterbedienhandgerät 1 derart an dem Glied 6.1 des Roboterarms 6 angekoppelt, dass der Handgriff 3 des Roboterbedienhandgeräts 1 beispielsweise in Richtung der Zangen 16.1 und 16.2 des Werkzeugs 16 ausgerichtet angeordnet sind.

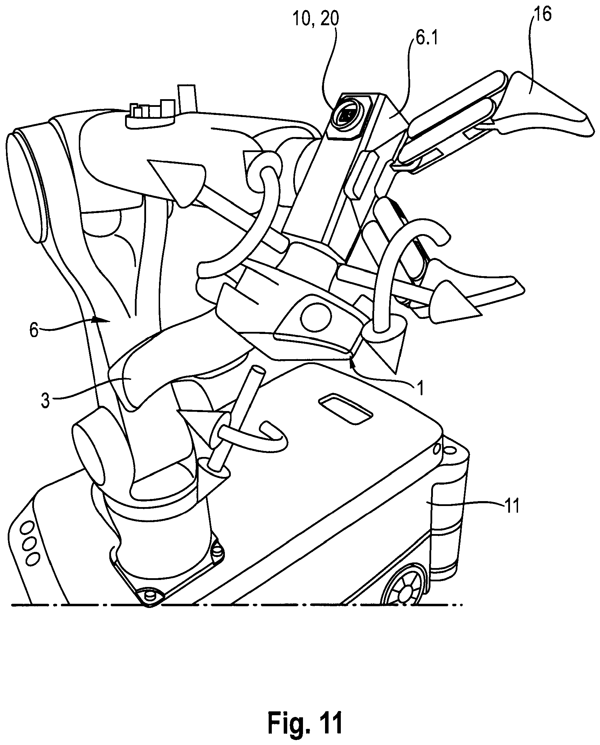

In einem vierten Bedienszenario gemäß Fig. 11 ist das Roboterbedienhandgerät 1 im Gegensatz zum Bedienszenario gemäß Fig. 10 umgekehrt an dem Glied 6.1 des Roboterarms 6 angekoppelt, so dass der Handgriff 3 des Roboterbedienhandgeräts 1 beispielsweise entgegen der Richtung der Zangen 16.1 und 16.2 des Werkzeugs 16 ausgerichtet angeordnet sind.

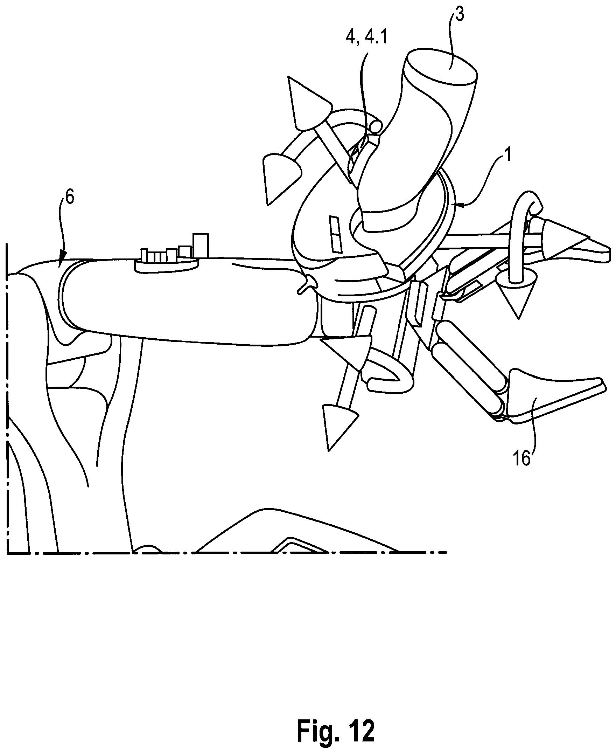

In einem fünften Bedienszenario gemäß Fig. 12 ist das Roboterbedienhandgerät 1 an einem anderen, zweiten Gegenkopplungsglied 10 desselben Gliedes 6.1 des Roboterarms 6 angekoppelt, als bei den Bedienszenarien gemäß Fig. 8 bis Fig. 11.

## Patentansprüche

1. Roboterbedienhandgerät, aufweisend:
- ein manuell tragbares Gehäuse (2),
- einen am manuell tragbaren Gehäuse (2) befestigten Handgriff (3),
- ein für eine Einhandbedienung in einer einhandgriffweite zu dem Handgriff (3) am Gehäuse (2) angeordnetes Eingabemittel (4), das ausgebildet ist, eine Zustimmeinrichtung (4.1) zu bilden, bei deren Aktivierung eine mit dem Roboterbedienhandgerät (1) steuerungstechnisch verbundene Robotersteuerung (5) ein handgeführtes Bewegen eines von der Robotersteuerung (5) gesteuerten Roboterarms (6) zulässt und bei einer Deaktivierung der Zustimmeinrichtung (4.1) die mit dem Roboterbedienhandgerät (1) steuerungstechnisch verbundene Robotersteuerung (5) ein handgeführtes Bewegen des von der Robotersteuerung (5) gesteuerten Roboterarms (6) unterbindet,
- eine am manuell tragbaren Gehäuse (2) angeordnete, mehrdimensionale Eingabevorrichtung (7), die ein manuelles Betätigungsglied (7.1) aufweist, das in den mehreren Dimensionen bewegbar an einem Basiskörper (7.2) der mehrdimensionalen Eingabevorrichtung (7) gelagert ist, wobei die mehrdimensionale Eingabevorrichtung (7) wenigstens einen Sensor (8) aufweist, der ausgebildet ist, eine Bewegung des manuellen Betätigungsglieds (7.1) relativ zum Basiskörper (7.2) in den mehreren Dimensionen zu erfassen, und der Basiskörper (7.2) starr im manuell tragbaren Gehäuse (2) befestigt ist, und
- ein zum manuellen Handführen des Roboterarms (6) durch manuelles Einwirken auf den Handgriff (2) des an den Roboterarm (6) mechanisch gekoppelten Roboterbedienhandgeräts (1) ausgebildetes, am manuellen Betätigungsglied (7.1) der mehrdimensionalen Eingabevorrichtung (7) des Roboterbedienhandgeräts (1) angeordnetes Kopplungsglied (9), das ausgebildet ist, in einem an den Roboterarm (6) angekoppelten Zustand des Roboterbedienhandgeräts (1), das manuelle Betätigungsglied (7.1) mechanisch starr mit einem Glied (6.1) des Roboterarms (6) zu verbinden.

2. Roboterbedienhandgerät nach Anspruch 1, **dadurch gekennzeichnet, dass** das Kopplungsglied (9) ausgebildet ist, zur formschlüssigen und/oder kraftschlüssigen Verbindung mit einem zum Kopplungsglied (9) korrespondierenden Gegenkopplungsglied (10), das an einem Glied (6.1) des Roboterarms (6), an einem vom Roboterarm (6) geführten Werkzeug (16), an einem vom Roboterarm (6) zu handhabenden Werkstück (12) oder an einer den Roboterarm (6) tragenden mobilen Plattform (11) befestigt ist wobei vorzugsweise das Gegenkopplungsglied (10) einen Ringvorsprung (13) aufweist, der eine Außenmantelwand (13.1) und eine Innenmantelwand (13.2) aufweist, und das Kopplungsglied (9) eine Außenringwand (9.1) und eine Innenringwand (9.2) aufweist, derart, dass in einer Kopplungsanordnung von Kopplungsglied (9) und Gegenkopplungsglied (10) die Außenringwand (9.1) des Kopplungsglieds (9) an der Außenmantelwand (13.1) des Gegenkopplungsglieds (10) anliegt und die Innenringwand (9.2) des Kopplungsglieds (9) an der Innenmantelwand (13.2) des Gegenkopplungsglieds (10) anliegt.

3. Roboterbedienhandgerät nach einem der Ansprüche 1 bis 2, **dadurch gekennzeichnet, dass** das Kopplungsglied (9) und das Gegenkopplungsglied (10) eine Rastvorrichtung bildet, welche ausgebildet ist, ein Zusammenfügen des Kopplungsglieds (9) und des Gegenkopplungsglieds (10) in ausschließlich einer einzigen relativen Orientierung zueinander zuzulassen oder in zwei oder mehreren verschiedenen, diskreten relativen Orientierungen zueinander zuzulassen.

4. Roboterbedienhandgerät nach einem der Ansprüche 1 bis 3, **dadurch gekennzeichnet, dass** das manuelle Betätigungsglied (7.1) der mehrdimensionalen Eingabevorrichtung (7) einen Identifikations-Sensor (14) aufweist, der ausgebildet ist, in einem an den Roboterarm (6) angekoppelten Zustand des Roboterbedienhandgeräts (1), insbesondere in einem zusammengefügten Zustand von Kopplungsglied (9) und Gegenkopplungsglied (10), eine an einem Kodierelement (15) des Roboterarms (6), des vom Roboterarm (6) geführten Werkzeugs (16), des vom Roboterarm (6) zu handhabenden Werkstücks (12) oder des Gegenkopplungsglieds (10) gespeicherte Information zu erfassen.

5. Roboterbedienhandgerät nach einem der Ansprüche 1 bis 4, **dadurch gekennzeichnet, dass** der Roboterarm (6), das vom Roboterarm (6) geführte Werkzeug (16), das vom Roboterarm (6) zu handhabenden Werkstück (12) oder das Gegenkopplungsglied (10) einen Identifikations-Sensor (14) aufweist, der ausgebildet ist, in einem an den Roboterarm (6) angekoppelten Zustand des Roboterbedienhandgeräts (1), insbesondere in einem zusammengefügten Zustand von Kopplungsglied (9) und Gegenkopplungsglied (10), eine an einem Kodierelement (15) des manuellen Betätigungsglieds (7.1) der mehrdimensionalen Eingabevorrichtung (7) gespeicherte Information zu erfassen.

6. Roboterbedienhandgerät nach Anspruch 4 oder 5, **dadurch gekennzeichnet, dass** das Kodierelement (15) mehrere pixelartige Markierungen (17), Vorsprünge oder Vertiefungen aufweist, die in analoger oder digitaler Form eine den individuellen Roboterarm (6), das individuelle Werkzeug (16), das individuelle Werkstück (12), oder die mobile Plattform (11), woran das Kodierelement (15) angeordnet ist, kennzeichnende Information enthalten.

7. Roboterbedienhandgerät nach einem der Ansprüche 4 bis 6, **dadurch gekennzeichnet, dass** das Kodierelement (15) mehrere pixelartige Markierungen (17), Vorsprünge oder Vertiefungen aufweist, die in analoger oder digitaler Form eine die Position und/oder Orientierung des Gegenkopplungsglieds (10) an dem Roboterarm (6), an dem Werkzeug (16), an dem Werkstück (12) oder an der mobilen Plattform (11) kennzeichnende Information enthalten.

8. Roboterbedienhandgerät nach einem der Ansprüche 4 bis 7, **dadurch gekennzeichnet, dass** der Identifikations-Sensor (14) ein berührungslos aufnehmender Identifikations-Sensor, ein optischer Identifikations-Sensor, ein Magnetfeldsensor oder ein mittels elektromagnetischer Wellen kommunizierender Identifikations-Sensor ist.

9. Kopplungsvorrichtung, aufweisend eine Grundplatte (21), die eine Vorderseite aufweist, an der ein Gegenkopplungsglied (10) angeordnet ist, zum Ankoppeln eines zum Gegenkopplungsglied (10) korrespondierenden Kopplungsglieds (9), das an einem manuellen Betätigungsglied (7.1) einer mehrdimensionalen Eingabevorrichtung (7) eines Roboterbedienhandgeräts (1), insbesondere eines Roboterbedienhandgeräts (1) nach einem der Ansprüche 1 bis 8 , angeordnet ist, derart, dass in einem an die Kopplungsvorrichtung (20) angekoppelten Zustand des Roboterbedienhandgeräts (1), das manuelle Betätigungsglied (7.1) mechanisch starr mit der Kopplungsvorrichtung (20) verbunden ist, und aufweisend eine Rückseite mit einer Befestigungsfläche (22), die zum Befestigen der Kopplungsvorrichtung (20) an einer Oberfläche eines Roboterarms (6), eines Glieds (6.1) des Roboterarms (6), eines Werkzeugflansches des Roboterarms (6), eines vom Roboterarm (6) geführten Werkzeugs (16), eines vom Roboterarm (6) zu handhabenden Werkstücks (12)oder einer mobilen Plattform (11) ausgebildet ist, wobei dass das Gegenkopplungsglied (10) der Kopplungsvorrichtung (20) einen Ringvorsprung (13) aufweist, der eine Außenmantelwand (13.1) und eine Innenmantelwand (13.2) aufweist, derart, dass in einer Kopplungsanordnung des Gegenkopplungsglieds (10) mit einem korrespondierenden Kopplungsglied (9) eine Außenringwand (9.1) des Kopplungsglieds (9) an der Außenmantelwand (13.1) des Gegenkopplungsglieds (10) anliegt und eine Innenringwand (9.2) des Kopplungsglieds (9) an der Innenmantelwand (13.2) des Gegenkopplungsglieds (10) anliegt.

10. Kopplungsvorrichtung nach Anspruch 9, aufweisend ein Kodierelement (15), das mehrere pixelartige Markierungen (17), Vorsprünge oder Vertiefungen aufweist, die in analoger oder digitaler Form eine den individuellen Roboterarm (6), das individuelle Werkzeug (16), das individuelle Werkstück (12), an dem die Kopplungsvorrichtung (20) anzuordnen ist, kennzeichnende Information enthalten und/oder das Kodierelement (15) mehrere pixelartige Markierungen (17), Vorsprünge oder Vertiefungen aufweist, die in analoger oder digitaler Form eine die Position und/oder Orientierung des Gegenkopplungsglieds (10) an dem Roboterarm (6), an dem Werkzeug (16) oder an dem Werkstück (12), kennzeichnende Information enthalten.

11. Roboter aufweisend einen Roboterarm (6.1) mit mehreren Gliedern (6.1) und die Glieder (6.1) gegeneinander verstellbar verbindenden Gelenken (6.3), die von Motoren angetrieben, durch eine Robotersteuerung (6.2) des Roboters angesteuert verstellbar sind, wobei ein oder mehrere Kopplungsvorrichtungen (20) nach einem der Ansprüche 9 oder 10 ausgebildet sind, aufweisend ein Roboterbedienhandgerät (1) nach einem der Ansprüche 1 bis 8, wobei die Robotersteuerung (5) des Roboters eingerichtet ist, auf Grundlage von Sensorwerten, die durch den wenigstens einen Sensor (8) des mehrdimensionalen Eingabemittels (7) des Roboterbedienhandgeräts (1) erfasst werden, die Gelenke (6.2) des Roboterarms (6) derart anzusteuern, dass der Roboterarm (6) den Bewegungen einer Hand (24) eines Benutzers (25), der auf den Handgriff (3) des Roboterbedienhandgeräts (1) einwirkt, folgt, wenn das Roboterbedienhandgerät (1) mittels des Kopplungsglieds (9) an einem Glied (9.1) des Roboterarms (6), an einem vom Roboterarm (6) geführten Werkzeug (16) oder an einem vom Roboterarm (6) zu handhabenden Werkstück (16) angekoppelt ist.

12. Verfahren zum handgeführten Bewegen eines von einer Robotersteuerung (5) gesteuerten, mehrere Glieder (6.1) aufweisenden Roboterarms (6) mittels eines steuerungstechnisch mit der Robotersteuerung (5) verbundenen Roboterbedienhandgeräts (1), insbesondere Roboterbedienhandgerät (1) nach einem der Ansprüche 1 bis 10, bei dem das Roboterbedienhandgerät (1) für eine Einhandbedienung einen Handgriff (3) aufweist und wenigstens eine mehrdimensionale Eingabevorrichtung (7) mit einem Betätigungsglied (7.1) aufweist, mit den Schritten:
- Ausstatten wenigstens eines Gliedes (6.1) des Roboterarms (6) mit wenigstens einer Kopplungsvorrichtung (20), insbesondere einer Kopplungsvorrichtung (20) nach einem der Ansprüche 9 bis 10,
- Ausstatten des Betätigungsglieds (7.1) der mehrdimensionalen Eingabevorrichtung (7) des Roboterbedienhandgeräts (1) mit einem zur Kopplungsvorrichtung (20) korrespondierenden Kopplungsglied (9),
- Ankoppeln des Roboterbedienhandgeräts (1) an das Glied (6.1) des Roboterarms (6), indem das Kopplungsglied (9) des Roboterbedienhandgeräts (1) starr mit der Kopplungsvorrichtung (20) des Roboterarms (6) verbunden wird.

13. Verfahren nach Anspruch 12, **dadurch gekennzeichnet, dass** im angekoppelten Zustand des Roboterbedienhandgeräts (1) an dem Glied (6.1) des Roboterarms (6) eine Identifikation des momentan angekoppelten individuellen Roboterbedienhandgeräts (1) erfolgt und eine das individuelle Roboterbedienhandgerät (1) kennzeichnende Information an die Robotersteuerung (5) übermittelt wird.

14. Verfahren nach Anspruch 12 oder 13, **dadurch gekennzeichnet, dass** im angekoppelten Zustand des Roboterbedienhandgeräts (1) an dem Glied (6.1) des Roboterarms (6) eine Identifikation der relativen Orientierung des momentan angekoppelten individuellen Roboterbedienhandgeräts (1) bezüglich des Gliedes (6.1) des Roboterarms (6), an welchem Glied (6.1) das Roboterbedienhandgerät (1) angekoppelt ist, erfolgt und eine die relative Orientierung kennzeichnende Information, insbesondere in Form eines Bezugskoordinatensystems, an die Robotersteuerung (5) übermittelt wird, wobei vorzugsweise mit der Robotersteuerung (5) aufgrund der erhaltenen, die relative Orientierung kennzeichnenden Information, insbesondere in Form eines Bezugskoordinatensystems, die Freiheitsgrade der mehrdimensionalen Eingabevorrichtung (7) an die Freiheitsgrade, in denen der Roboterarm (6) mittels des angekoppelten Roboterbedienhandgeräts (1) manuell bewegbar ist, angepasst, insbesondere räumlich übereinstimmend eingerichtet werden.

15. Verfahren nach einem der Ansprüche 12 bis 14, **dadurch gekennzeichnet, dass** die mehrdimensionale Eingabevorrichtung (7) des Roboterbedienhandgeräts (1) in seinen mehreren Dimensionen kraftsensitiv ausgebildet ist und der Roboterarm (6) mittels der Robotersteuerung (5) kraftgeregelt angesteuert wird und zwar in Abhängigkeit der von einem Benutzer während des manuellen Führens des Roboterarms (6) mittels des angekoppelten Roboterbedienhandgeräts (1) vom Benutzer über die mehrdimensionale Eingabevorrichtung (7) auf den Roboterarm (6) eingeleiteten Kräfte, auf Grundlage der an der mehrdimensionale Eingabevorrichtung (7) erfassten und an die Robotersteuerung (5) übermittelten Kräfte und Kraftrichtungen.

## Claims

1. Handheld robot operator control device, comprising:
- a manually portable housing (2),
- a handle (3) attached to the manually portable housing (2),
- an input means (4) which is arranged on the housing (2) for one-handed operator control with a one-handed grip on the handle (3) and is designed to form an enabling device (4.1), a robot controller (5) connected in control terms to the robot operator control device (1) permitting hand-guided movement of a robot arm (6) controlled by the robot controller (5) when the enabling device is activated and the robot controller (5) connected in control terms to the robot operator control device (1) suppressing hand-guided movement of the robot arm (6) controlled by the robot controller (5) when the enabling device (4.1) is deactivated,
- a multidimensional input apparatus (7) which is arranged on the manually portable housing (2) and has a manual actuating member (7.1) which is mounted on a base body (7.2) of the multidimensional input apparatus (7) in a manner movable in the several dimensions, wherein the multidimensional input apparatus (7) has at least one sensor (8) which is designed to detect a movement of the manual actuating member (7.1) relative to the base body (7.2) in the several dimensions, and the base body (7.2) is rigidly fastened in the manually portable housing (2), and
- a coupling element (9) which is designed for manually hand-guiding the robot arm (6) by manually acting on the handle (2) of the robot operator control device (1) mechanically coupled to the robot arm (6), which is arranged on the manual actuating member (7.1) of the multidimensional input apparatus (7) of the robot operator control device (1) and which is designed, in a state in which the robot operator control device (1) is coupled to the robot arm (6), to mechanically rigidly connect the manual actuating member (7.1) to a member (6.1) of the robot arm (6).

2. Handheld robot operator control device according to Claim 1, **characterized in that** the coupling member (9) is designed, for interlocking and/or force-fitting connection to a mating coupling member (10) which corresponds to the coupling member (9) and is fastened to a member (6.1) of the robot arm (6), to a tool (16) guided by the robot arm (6), to a workpiece (12) to be handled by the robot arm (6) or to a mobile platform (11) supporting the robot arm (6), wherein the mating coupling member (10) preferably has an annular projection (13) which has an outer lateral wall (13.1) and an inner lateral wall (13.2), and the coupling member (9) has an outer annular wall (9.1) and an inner annular wall (9.2), in such a way that the outer annular wall (9.1) of the coupling member (9) bears against the outer lateral wall (13.1) of the mating coupling member (10) and the inner annular wall (9.2) of the coupling member (9) bears against the inner lateral wall (13.2) of the mating coupling member (10) in a coupling arrangement of the coupling member (9) and the mating coupling member (10).

3. Handheld robot operator control device according to either of Claims 1 and 2, **characterized in that** the coupling member (9) and the mating coupling member (10) form a latching apparatus which is designed to permit joining of the coupling member (9) and the mating coupling member (10) with only one single relative orientation with respect to one another or with two or more different, discrete relative orientations with respect to one another.

4. Handheld robot operator control device according to one of Claims 1 to 3, **characterized in that** the manual actuating member (7.1) of the multidimensional input apparatus (7) has an identification sensor (14) which is designed, in a state in which the handheld robot operator control device (1) is coupled to the robot arm (6), in particular in a state in which the coupling member (9) and the mating coupling member (10) are joined, to detect an item of information stored on a coding element (15) of the robot arm (6), of the tool (16) guided by the robot arm (6), of the workpiece (12) to be handled by the robot arm (6) or of the mating coupling member (10).

5. Handheld robot operator control device according to one of Claims 1 to 4, **characterized in that** the robot arm (6), the tool (16) guided by the robot arm (6), the workpiece (12) to be handled by the robot arm (6) or the mating coupling member (10) has an identification sensor (14) which is designed, in a state in which the handheld robot operator control device (1) is coupled to the robot arm (6), in particular in a state in which the coupling member (9) and the mating coupling member (10) are joined, to detect an item of information stored on a coding element (15) of the manual actuating member (7.1) of the multidimensional input apparatus (7).

6. Handheld robot operator control device according to Claim 4 or 5, **characterized in that** the coding element (15) has a plurality of pixel-like markings (17), projections or recesses which contain, in analog or digital form, an item of information characterizing the individual robot arm (6), the individual tool (16), individual workpiece (12) or the mobile platform (11) on which the coding element (15) is arranged.

7. Handheld robot operator control device according to one of Claims 4 to 6, **characterized in that** the coding element (15) has a plurality of pixel-like markings (17), projections or recesses which contain, in analog or digital form, an item of information characterizing the position and/or orientation of the mating coupling member (10) on the robot arm (6), on the tool (16), on the workpiece (12) or on the mobile platform (11).

8. Handheld robot operator control device according to one of Claims 4 to 7, **characterized in that** the identification sensor (14) is a contactlessly recording identification sensor, an optical identification sensor, a magnetic field sensor or an identification sensor communicating by means of electromagnetic waves.

9. Coupling apparatus, having a base plate (21) which has a front side on which a mating coupling member (10) is arranged, for coupling to a coupling member (9) which corresponds to the mating coupling member (10) and is arranged on a manual actuating member (7.1) of a multidimensional input apparatus (7) of a handheld robot operator control device (1), in particular a handheld robot operator control device (1) according to one of Claims 1 to 8, in such a way that the manual actuating member (7.1) is mechanically rigidly connected to the coupling apparatus (20) in a state in which the handheld robot operator control device (1) is coupled to the coupling apparatus (20), and having a rear side with a fastening area (22) which is designed for fastening the coupling apparatus (20) to a surface of a robot arm (6), of a member (6.1) of the robot arm (6), of a tool flange of the robot arm (6), of a tool (16) guided by the robot arm (6), of a workpiece (12) to be handled by the robot arm (6) or of a mobile platform (11), wherein the mating coupling member (10) of the coupling apparatus (20) has an annular projection (13) which has an outer lateral wall (13.1) and an inner lateral wall (13.2) in such a way that, in a coupling arrangement of the mating coupling member (10) with a corresponding coupling member (9), an outer annular wall (9.1) of the coupling member (9) bears against the outer lateral wall (13.1) of the mating coupling member (10) and an inner annular wall (9.2) of the coupling member (9) bears against the inner lateral wall (13.2) of the mating coupling member (10).

10. Coupling apparatus according to Claim 9, having a coding element (15) which has a plurality of pixel-like markings (17), projections or recesses which contain, in analog or digital form, an item of information characterizing the individual robot arm (6), the individual tool (16) or the individual workpiece (12) on which the coupling apparatus (20) is to be arranged and/or the coding element (15) has a plurality of pixel-like markings (17), projections or recesses which contain, in analog or digital form, an item of information characterizing the position and/or orientation of the mating coupling member (10) on the robot arm (6), on the tool (16) or on the workpiece (12).

11. Robot having a robot arm (6.1) with a plurality of members (6.1) and joints (6.3) which connect the members (6.1) in a manner adjustable in relation to one another and, in a manner driven by motors, are adjustable in a manner actuated by a robot controller (6.2) of the robot, wherein one or more coupling apparatuses (20) are designed according to either of Claims 9 and 10, having a handheld robot operator control device (1) according to one of Claims 1 to 8, wherein the robot controller (5) of the robot is configured to actuate the joints (6.2) of the robot arm (6), on the basis of sensor values which are detected by the at least one sensor (8) of the multidimensional input means (7) of the handheld robot operator control device (1), in such a way that the robot arm (6) follows the movements of a hand (24) of a user (25), which hand acts on the handle (3) of the handheld robot operator control device (1), when the handheld robot operator control device (1) is coupled by means of the coupling member (9) to a member (9.1) of the robot arm (6), to a tool (16) guided by the robot arm (6) or to a workpiece (16) to be handled by the robot arm (6).

12. Method for moving in a hand-guided manner a robot arm (6), which is controlled by a robot controller (5) and has a plurality of members (6.1), by means of a handheld robot operator control device (1) connected in control terms to the robot controller (5), in particular a handheld robot operator control device (1) according to one of Claims 1 to 10, in which method the handheld robot operator control device (1) has, for one-handed operator control, a handle (3) and has at least one multidimensional input apparatus (7) with an actuating member (7.1), comprising the steps of:
- equipping at least one member (6.1) of the robot arm (6) with at least one coupling apparatus (20), in particular a coupling apparatus (20) according to either of Claims 9 and 10,
- equipping the actuating member (7.1) of the multidimensional input apparatus (7) of the handheld robot operator control device (1) with a coupling member (9) corresponding to the coupling apparatus (20),
- coupling the handheld robot operator control device (1) to the member (6.1) of the robot arm (6) by way of the coupling member (9) of the handheld robot operator control device (1) being rigidly connected to the coupling apparatus (20) of the robot arm (6).

13. Method according to Claim 12, **characterized in that**, in the state in which the handheld robot operator control device (1) is coupled to the member (6.1) of the robot arm (6), the currently coupled individual handheld robot operator control device (1) is identified and an item of information characterizing the individual handheld robot operator control device (1) is transmitted to the robot controller (5).

14. Method according to Claim 12 or 13, **characterized in that**, in the state in which the handheld robot operator control device (1) is coupled to the member (6.1) of the robot arm (6), the relative orientation of the currently coupled individual handheld robot operator control device (1) with respect to the member (6.1) of the robot arm (6), to which member (6.1) the handheld robot operator control device (1) is coupled, is identified and an item of information characterizing the relative orientation, in particular in the form of a reference coordinate system, is transmitted to the robot controller (5), wherein, preferably using the robot controller (5), on account of the received item of information characterizing the relative orientation, in particular in the form of a reference coordinate system, the degrees of freedom of the multidimensional input apparatus (7) are adapted, in particular configured in a spatially corresponding manner, to the degrees of freedom in which the robot arm (6) is manually movable by means of the coupled handheld robot operator control device (1).

15. Method according to one of Claims 12 to 14, **characterized in that** the multidimensional input apparatus (7) of the handheld robot operator control device (1) is of force-sensitive design in its several dimensions and the robot arm (6) is actuated in a force-controlled manner by means of the robot controller (5), specifically depending on the forces introduced onto the robot arm (6) by a user during manual guidance of the robot arm (6) by means of the coupled handheld robot operator control device (1) by the user via the multidimensional input apparatus (7), on the basis of the forces and force directions detected on the multidimensional input apparatus (7) and transmitted to the robot controller (5).

## Revendications

1. Console de commande portative robotisée, comprenant :
- un boîtier (2) portable manuellement,
- une poignée (3) fixée au boîtier (2) portable manuellement,
- un moyen d'entrée (4) agencé sur le boîtier (2) pour une commande à une main sur largeur de prise à une main de la poignée (3), qui est conçu pour former un dispositif de validation (4.1), par l'activation duquel une commande de robot (5) reliée par technique de commande à la console de commande portative robotisée (1) autorise un mouvement guidé manuellement d'un bras de robot (6) commandé par la commande de robot (5), et, lors d'une désactivation du dispositif de validation (4.1), la commande de robot (5) reliée à la console de commande portative robotisée (1) par une technique de commande empêche un mouvement guidé manuellement du bras de robot (6) commandé par la commande de robot (5),
- un dispositif d'entrée multidimensionnel (7) agencé sur le boîtier (2) portable manuellement, qui présente un organe d'actionnement manuel (7.1) apte à être déplacé dans les plusieurs dimensions sur un corps de base (7.2) du dispositif d'entrée multidimensionnel (7), le dispositif d'entrée multidimensionnel (7) présentant au moins un capteur (8) qui est conçu pour détecter un mouvement de l'organe d'actionnement manuel (7.1) par rapport au corps de base (7.2) dans les plusieurs dimensions, et le corps de base (7.2) étant fixé rigidement dans le boîtier (2) portable manuellement, et
- un organe d'accouplement (9) disposé sur l'organe de commande manuel (7.1) du dispositif d'entrée multidimensionnel (7) de la console de commande portative robotisée (1), qui est conçu pour relier mécaniquement et rigidement l'organe d'actionnement manuel (7.1) à un élément (6.1) du bras de robot (6) dans un état de liaison de la console de commande portative robotisée (1) au bras de robot (6).

2. Console de commande portative robotisée selon la revendication 1, **caractérisée en ce que** l'organe d'accouplement (9) est conçu de façon à être apte à être relié par complémentarité de forme et/ou par force à un organe d'accouplement associé (10) correspondant à l'organe d'accouplement (9), qui est fixé à un élément (6.1) du bras de robot (6), à un outil (16) guidé par le bras de robot (6), à une pièce de travail (12) à manipuler par le bras de robot (6) ou à une plate-forme mobile (11) portant le bras de robot (6), l'organe d'accouplement associé (10) présentant de préférence une saillie annulaire (13) qui comprend une paroi d'enveloppe extérieure (13.1) et une paroi d'enveloppe intérieure (13.2), et l'organe d'accouplement (9) présente une paroi annulaire extérieure (9.1) et une paroi annulaire intérieure (9.2), de telle sorte que, dans une disposition d'accouplement de l'organe d'accouplement (9) et de l'organe d'accouplement associé (10), la paroi annulaire extérieure (9.1) de l'organe d'accouplement (9) s'applique contre la paroi d'enveloppe extérieure (13.1) de l'organe d'accouplement associé (10), et la paroi d'enveloppe intérieure (9.2) de l'organe d'accouplement (9) s'applique contre la paroi d'enveloppe intérieure (13.2) de l'organe d'accouplement associé (10).

3. Console de commande portative robotisée selon l'une des revendications 1 à 2, **caractérisée en ce que** l'organe d'accouplement (9) et l'organe d'accouplement associé (10) forment un dispositif d'encliquetage qui est conçu pour permettre une réunion exclusive de l'organe d'accouplement (9) et de l'organe d'accouplement associé (10) pour permettre une seule orientation relative de l'un par rapport à l'autre ou pour permettre deux ou plusieurs orientations relatives discrètes différentes de l'un par rapport à l'autre.

4. Console de commande portative robotisée selon l'une des revendications 1 à 3, **caractérisée en ce que** l'organe d'actionnement manuel (7.1) du dispositif d'entrée multidimensionnel (7) comporte un capteur d'identification (14) qui est conçu pour détecter, dans un état de liaison à la console de commande portative robotisée (1) au bras de robot (6), notamment dans un état de réunion de l'organe d'accouplement (9) et de l'organe d'accouplement associé (10), des informations mémorisées sur un élément de codage (15) du bras de robot (6), de l'outil (16) guidé par le bras de robot (6), de la pièce de travail (12) à manipuler par le bras de robot (6) ou de l'organe d'accouplement associé (10).

5. Console de commande portative robotisée selon l'une des revendications 1 à 4, **caractérisée en ce que** le bras de robot (6), l'outil (16) guidé par le bras de robot (6), la pièce de travail (12) à manipuler par le bras de robot (6) ou l'organe d'accouplement associé (10) comporte un capteur d'identification (14), qui est conçu, dans un état de liaison au bras de robot (6) de la console de commande portative robotisée (1), en particulier dans un état de réunion de l'organe d'accouplement (9) et de l'organe d'accouplement associé (10), pour transmettre des informations enregistrées à un élément de codage (15) de l'organe d'actionnement manuel (7.1) du dispositif d'entrée multidimensionnel (7).

6. Console de commande portative robotisée selon la revendication 4 ou 5, **caractérisée en ce que** l'élément de codage (15) présente une pluralité de marquages (17), saillies ou dépressions de type pixel qui contiennent, sous forme analogique ou numérique, des informations caractérisant le bras de robot individuel (6), l'outil individuel (16), la pièce à travailler individuelle (12) ou la plate-forme mobile (11) sur laquelle est agencé l'élément de codage (15).

7. Console de commande portative robotisée selon l'une des revendications 4 à 6, **caractérisée en ce que** l'élément de codage (15) présente une pluralité de marquages (17), saillies ou dépressions de type pixel qui contiennent, sous forme analogique ou numérique, des informations caractérisant la position et/ou l'orientation de l'élément d'accouplement associé (10) le bras de robot (6), l'outil (16), la pièce à travailler (12) ou la plate-forme mobile (11).

8. Console robotique selon l'une des revendications 4 à 7, **caractérisée en ce que** le capteur d'identification (14) est un capteur d'identification à détection sans contact, un capteur d'identification optique, un capteur de champ magnétique ou un capteur d'identification communiquant par ondes électromagnétiques.

9. Dispositif d'accouplement comprenant une plaque de base (21) ayant une face avant sur laquelle est agencé un élément d'accouplement associé (10) pour accoupler un organe d'accouplement (9) correspondant à l'élément d'accouplement associé (10) à un organe d'actionnement manuel (7.1) d'un dispositif d'entrée multidimensionnel (7) d'une console de commande portative robotisée (1), en particulier d'une console de commande portative robotisée (1) selon l'une des revendications 1 à 8, de telle sorte que dans un état relié au dispositif d'accouplement (20) de la console de commande portative robotisée (1), l'organe d'actionnement manuel (7.1) est relié mécaniquement de manière rigide au dispositif d'accouplement (20), et comprenant une face arrière avec une surface de fixation (22) qui est destinée à fixer le dispositif d'accouplement (20) à une surface d'un bras de robot (6), d'un élément (6.1) du bras de robot (6), d'une bride d'outil du bras de robot (6), d'un outil (16) guidé par le bras de robot (6), d'une pièce de travail (12) à manipuler par le bras de robot (6) ou d'une plate-forme mobile (11), l'organe d'accouplement associé (10) du dispositif d'accouplement (20) présentant une saillie annulaire (13) qui comprend une paroi d'enveloppe extérieure (13.1) et une paroi d'enveloppe intérieure (13.2), de telle sorte que, dans un agencement d'accouplement de l'organe d'accouplement associé (10) à un organe d'accouplement correspondant (9), une paroi annulaire extérieure (9.1) de l'organe d'accouplement (9) s'applique contre la paroi d'enveloppe extérieure (13.1) de l'organe d'accouplement associé (10) et qu'une paroi annulaire intérieure (9.2) de l'organe d'accouplement (9) s'applique contre la paroi d'enveloppe intérieure (13.2) de l'organe d'accouplement associé (10).

10. Dispositif d'accouplement selon la revendication 9, présentant un élément de codage (15) qui présente plusieurs marquages (17), saillies ou dépressions de type pixel, qui fournissent sous forme analogique ou numérique des informations sur le bras robotisé individuel (6), l'outil individuel (16), la pièce individuelle (12) sur laquelle le dispositif d'accouplement (20) doit être agencé, et/ou l'élément de codage (15) présente plusieurs marquages (17), saillies ou dépressions de type pixel qui contiennent, sous forme analogique ou numérique, des informations caractérisant la position et/ou l'orientation de l'organe d'accouplement associé (10) sur le bras de robot (6), sur l'outil (16) ou sur la pièce à travailler (12).

11. Robot présentant un bras de robot (6.1) avec plusieurs éléments (6.1) et des articulations (6.3) reliant les éléments (6.1) les uns aux autres de manière réglable, qui sont entraînés par des moteurs, sont commandés par une commande de robot (6.2) du robot, un ou plusieurs dispositifs d'accouplement (20) étant réalisés selon l'une des revendications 9 ou 10, comprenant une console de commande portative robotisée (1) selon l'une des revendications 1 à 8, la commande de robot (5) du robot étant agencée, sur la base de valeurs de capteur détectées par ledit au moins un capteur (8) du moyen d'entrée multidimensionnel (7) de la console de commande portative robotisée (1), pour commander les articulations (6.2) du bras de robot (6) de telle sorte que le bras de robot (6) suit les mouvements d'une main (24) d'un utilisateur (25) qui agit sur la poignée (3) de la console commande portative robotisée (1) lorsque la console de commande portative robotisée (1) est reliée au moyen de l'organe d'accouplement (9) à un élément (9.1) du bras de robot (6), à un outil (16) guidé par le bras de robot (6) ou à une pièce de travail (12) à manipuler par le bras de robot (6).

12. Procédé pour déplacer manuellement un bras de robot (6) commandé par une commande de robot (5) et présentant plusieurs éléments (6.1) au moyen d'une console de commande portative robotisée (1) reliée à la commande de robot (5) par une technique de commande, en particulier une console de commande portative robotisée (1) selon l'une des revendications 1 à 10, la console de commande portative robotisée (1) présentant une poignée (3) pour une commande à une main et présente au moins un dispositif d'entrée multidimensionnel (7) avec un organe d'actionnement (7.1), comprenant les étapes suivantes :
- équiper au moins un élément (6.1) du bras de robot (6) d'au moins un dispositif d'accouplement (20), notamment un dispositif d'accouplement (20) selon l'une des revendications 9 à 10,
- équiper l'organe d'actionnement (7.1) du dispositif d'entrée multidimensionnel (7) de la console de commande portative robotisée (1) d'un organe d'accouplement (9) correspondant au dispositif d'accouplement (20),
- accoupler la console de commande portative robotisée (1) à l'élément (6.1) du bras de robot (6) en reliant rigidement l'organe d'accouplement (9) de la console de commande portative robotisée (1) au dispositif d'accouplement (20) du bras de robot (6).

13. Procédé selon la revendication 12, **caractérisé en ce qu'**à l'état relié de la console de commande portative robotisée (1) à l'élément (6.1) du bras de robot (6), une identification de la console de commande portative robotisée individuelle (1) momentanément reliée est effectuée, et des informations caractérisant la console de commande portative robotisée individuelle (1) sont transmises à la commande de robot (5).

14. Procédé selon la revendication 12 ou 13, **caractérisé en ce que**, à l'état relié de la console de commande portative robotisée (1) à l'élément (6.1) du bras de robot (6), une identification de l'orientation relative de la console de commande portative robotisée individuelle (1) momentanément reliée est effectuée par rapport à l'élément (6.1) du bras de robot (6), auquel élément (6.1) la console de commande portative robotisée (1) est reliée, et des informations caractérisant l'orientation relative, en particulier sous la forme d'un système de coordonnées de référence, sont transmises à la commande de robot (5), de préférence avec la commande de robot (5) sur la base des informations obtenues caractérisant l'orientation relative, en particulier sous la forme d'un système de coordonnées de référence, les degrés de liberté du dispositif d'entrée multidimensionnel (7) étant adaptés aux degrés de liberté selon lesquels le bras de robot (6) est apte à être déplacé manuellement au moyen de la console de commande portative robotisée (1) reliée, et sont en particulier aménagés de manière à coïncider dans l'espace.

15. Procédé selon l'une des revendications 12 à 14, **caractérisé en ce que** le dispositif d'entrée multidimensionnel (7) de la console de commande portative robotisée (1) est conçu de manière à être sensible à une force dans ses plusieurs dimensions, et le bras de robot (6) est commandé de manière régulée par force au moyen de la commande de robot (5), et ceci, en fonction des forces appliquées par un utilisateur sur le bras de robot (6) via le dispositif d'entrée multidimensionnel (7) pendant le guidage manuel du bras de robot (6) au moyen de la console de commande portative robotisée (1) reliée, sur la base des forces et des directions de force détectées au niveau du dispositif d'entrée multidimensionnel (7) et transmises à la commande de robot (5).
